(19) Europäisches Patentamt
European Patent Office
Office européen des brevets

(11) **EP 0 896 205 A1**

(12) **EUROPEAN PATENT APPLICATION**
published in accordance with Art. 158(3) EPC

(43) Date of publication:
**10.02.1999 Bulletin 1999/06**

(51) Int. Cl.⁶: **G01D 5/12**, G01B 7/00

(21) Application number: **98900752.1**

(22) Date of filing: **27.01.1998**

(86) International application number:
**PCT/JP98/00318**

(87) International publication number:
**WO 98/33041 (30.07.1998 Gazette 1998/30)**

(84) Designated Contracting States:
**CH DE FR GB IT LI**

(30) Priority: **28.01.1997 JP 13905/97**
**28.01.1997 JP 13906/97**
**31.03.1997 JP 81016/97**

(71) Applicant:
**Sony Precision Technology Inc.**
**Shinagawa-ku Tokyo 141-0031 (JP)**

(72) Inventors:
• **NEKADO, Yasuo,**
**Sony Precision Technology Inc.**
**Tokyo 141 (JP)**
• **KUSUMI, Masaaki,**
**Sony Precision Technology Inc.**
**Tokyo 141 (JP)**

• **HIMURO, Kiyoshi**
**Yokohama-shi, Kanagawa 225 (JP)**
• **TSUCHIYA, Hideki,**
**Sony Precision Technology Inc.**
**Tokyo 141 (JP)**
• **SATO, Kenichi,**
**Sony Precision Technology Inc.**
**Tokyo 141 (JP)**

(74) Representative:
**Müller, Frithjof E., Dipl.-Ing.**
**Patentanwälte**
**MÜLLER & HOFFMANN,**
**Innere Wiener Strasse 17**
**81667 München (DE)**

(54) **MAGNETIC DISPLACEMENT DETECTOR AND CARBURETOR OPENING DETECTOR**

(57) A magnetic displacement detection apparatus having a magnetic-field detection portion incorporating an impedance-change magnetic sensor 104 having two coils 102 and 103 each of which has impedance which is changed in accordance with the intensity of an external magnetic field; a portion which must be detected and which has permanent magnets 105 and 106 for generating a magnetic field which is continuously changed in a direction in which relative movement with respect to the magnetic-field detection portion is performed; an oscillation circuit portion 107 for exciting and operating the magnetic sensor 104; and a detection circuit portion 108 for obtaining an output signal formed by converting change in the impedance of the magnetic sensor 104 occurring in accordance with the intensity of the external magnetic field applied from the magnetic-field generating means into an electric signal, wherein an absolute amount of displacement between the magnetic-field detection portion and the portion which must be detected is detected in response to the output signal.

DIRECTION OF RELATIVE MOVEMENT

**FIG.7**

Printed by Xerox (UK) Business Services
2.16.7/3.6

EP 0 896 205 A1

## Description

### Technical Field

The present invention relates to a magnetic displacement detection apparatus for use to detect an absolute amount of displacement between two members of, for example, a machine tool or a precise measuring apparatus which are relatively moved and to an apparatus for detecting the opening of a carburetor such that the magnetic displacement detection apparatus is employed to detect the opening of a throttle valve of a carburetor.

### Background Art

Hitherto, a variety of the following magnetic displacement detection apparatuses for detecting an absolute amount of displacement between two members of a machine tool or a precise measuring apparatus which are relatively moved have been available.

### (1) Absolute Scale Method

An absolute scale method includes a method structured such that each position of a scale in a direction in which relative movement is performed is given a binary code (a binary code, a gray code or the like) having a predetermined number of digits. By reading the code, the absolute position is detected. Another method is known which is structured such that a plurality of scales having individual wavelengths are sequentially disposed in the direction of the relative movement to detect the differences in the phases of the scales so as to generate absolute-value signals (a vernier method).

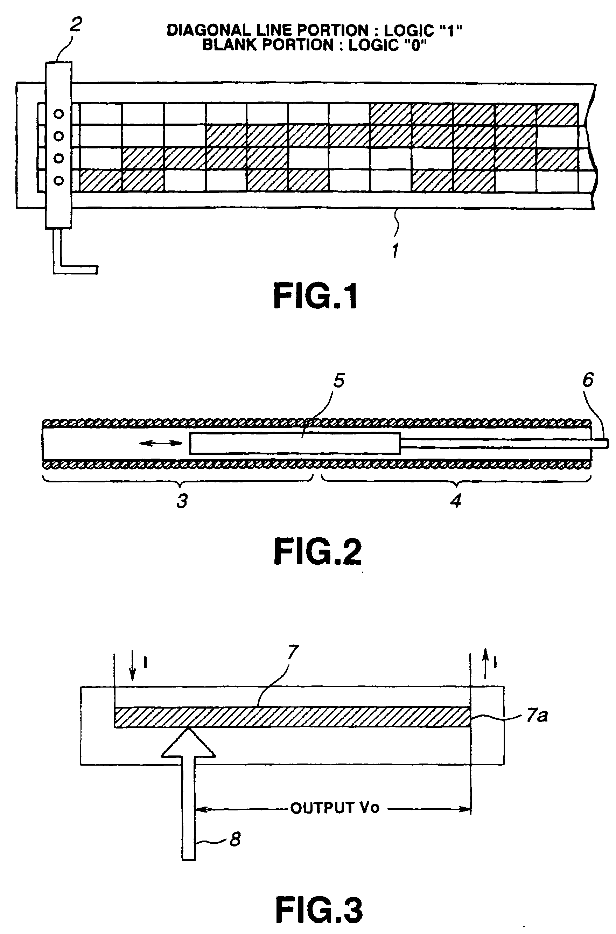

Fig. 1 shows an example of a structure in which 4-digit gray codes (white portions correspond to logic "0" and diagonal-line portions correspond to logic "1") are given to a scale 1. Moreover, a head 2 having detection portions corresponding the provided digits is operated to read the gray codes.

### (2) Differential Transformer Method

As shown in Fig. 2, two coils 3 and 4 are disposed in a line in the direction in which the relative movement is performed. Moreover, a core 5 made of a material having a high magnetic permeability is inserted into the coils 3 and 4 such that the relative movement of the core 5 is permitted. A fact that the inductance of the coils 3 and 4 is changed when the core 5 is moved is used to detect the difference between the outputs of the coils 3 and 4. Thus, an absolute amount of displacement exhibiting excellent linearity is detected.

### (3) Resistance-Type Potentiometer Method

As shown in Fig. 3, an electric current is allowed to pass through a resistance line 7 extending in the direction in which the relative movement is performed. Moreover, a contact 8 is brought into contact with the resistance line 7 such that relative movement of the contact 8 is permitted. In accordance with change in the voltage Vo between the contact 8 and an end 7a of the resistance line 7 occurring when the position of the contact is changed, the absolute amount of displacement is detected.

### (4) Magnetostrictive-Line Method

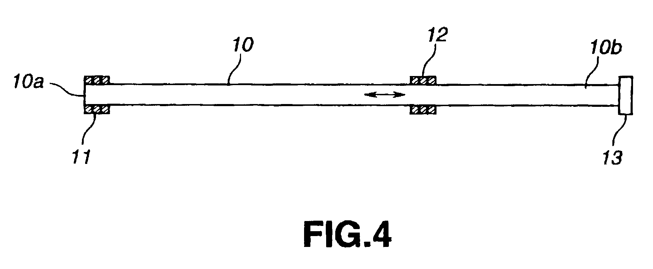

In accordance with delay time which takes in the magneto striction of metal, an absolute amount of displacement is detected. As shown in Fig. 4, a coil 11 is secured and joined to an end 10a of a metal wire 10 extending in the direction in which the relative movement is performed. Moreover, a detection coil 12 is joined to the metal wire 10 such that the relative movement of the detection coil 12 is permitted. When a pulse electric current is supplied to the coil 11, the metal is magnetized. Thus, magneto striction takes place in the metal wire 10 so that a magnetostrictive pulse propagates through the metal wire 10 from the end 10a to another 10b at the speed of sound (the speed of sound in the metal varies depending on the material of the metal). Thus, also the detection coil 12 is induced because of the magneto striction. Delay time taken from time at which the pulse electric current is supplied to time at which the detection coil 12 is induced is measured. In accordance with the delay time, an absolute amount of displacement is calculated.

However, the above-mentioned conventional methods for detecting the absolute amount of displacement have the following problems.

### (1) Absolute Scale Method

Although excellent detection accuracy and resolution can be realized, a complicated circuit structure is required. Therefore, the size and cost of the detection apparatus cannot easily be reduced.

### (2) Differential Transformer Method

Although the simple structure enables the cost to be reduced, the length of each of the coils 3 and 4 in the direction in which the absolute movement is performed must be not shorter than the corresponding effective lengths (the amounts of the detectable absolute amount of displacement). Moreover, also the length of a rod 6 required to move the core 5 must be the effective length or longer. Therefore, the overall length of the detection apparatus becomes three or more times the effective length. Thus, the ineffective length becomes too long as compared with the effective length and the size of the apparatus becomes enlarged excessively.

(3) Resistance-Type Potentiometer Method

Since a contact type structure is employed in which the contact 8 is brought into contact with the resistance line 7, durability is unsatisfactory. Therefore, the foregoing method is not suitable for use in a machine which is oscillated considerably.

(4) Magnetostrictive-Line Method

Since the propagation speed of the magneto striction is the speed of sound and next measurement must be waited until the reflection waves of the magnetostrictive pulses are attenuated by a pulse atenuator 13, detection takes excessively long time (that is, response speed is undesirably reduced). Although the ineffective length can be restricted to only the coil 11, a large number of circuit elements are required and the circuit structure becomes too complicated because a coil drive, a time measuring circuit and the like are required. Therefore, reduction of the size and cost of the apparatus cannot easily be performed.

Hitherto, motorcycles have been structured such that the ignition timing of the engine is controlled to enlarge the output of the engine, improve the fuel economy and clean exhaust gas. For example, a motorcycle of the foregoing type has the structure that the state of a load imposed on the engine is detected in accordance with the opening of a throttle valve. Thus, control is performed so that the ignition timing of the engine is made to be an optimum state.

For example, a motorcycle of a type incorporating a carburetor comprising a direct acting throttle valve has a structure that a potentiometer or the like for converting the amount of movement of the throttle valve into an amount of rotation is provided for the carburetor so as to detect the opening of the throttle valve in accordance with the amount of rotation of the potentiometer. Thus, the ignition timing of the engine is controlled.

However, when the ignition timing of the engine of a motorcycle or the like provided with a carburetor of the foregoing type is controlled, the potentiometer and the like must be provided additionally as described above. Therefore, the number of elements increases and the cost cannot be reduced.

To achieve the foregoing problems, an apparatus for detecting the opening a carburetor incorporating a direct-acting throttle valve has been disclosed in, for example, Japanese Patent Laid-Open No. 7-317571, the apparatus being capable of detecting the opening of a valve by a magnetic sensor.

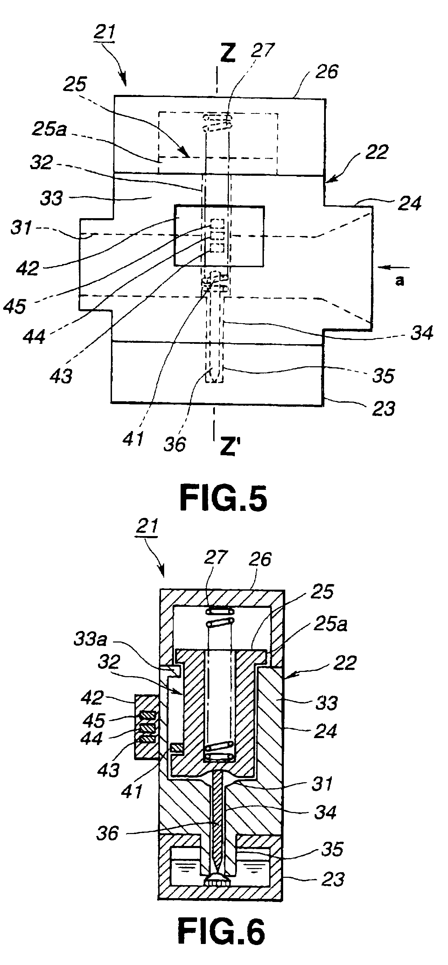

FIGS. 5 and 6 show a conventional carburetor to which the apparatus for detecting the opening of a throttle valve disclosed in Japanese Patent Laid-Open No. 7-317571 is applied. The carburetor will specifically be described. FIG. 5 is a side view showing the conventional carburetor. FIG. 6 is a cross sectional view taken along line Z-Z' shown in FIG. 5.

A conventional carburetor 21 incorporates a main body 22 and a chamber 23 connected to a fuel introducing passage 34 of the main body 22 and arranged such that liquid fuel is injected into the chamber 23.

The main body 22 incorporate a carburetor body 24; a piston valve 25 inserted into a valve chamber 32 formed in the carburetor body 24 and arranged to open/close a venturi passage 31 formed in the carburetor body 24; a cover 26 mounted on an upper opening of the carburetor body 24 so as to close the valve chamber 32; and a spring 27 disposed between the cover 26 and the piston valve 25 so as to urge the piston valve 25.

The carburetor body 24 made of, for example, zinc die-cast. The venturi passage 31 in which sucked air flows in a direction a shown in FIG. 5 is formed in the carburetor body 24. The carburetor body 24 has a cylinder portion 53 for forming a valve chamber 32 which upwards and vertically extends from the venturi passage 31, which is opened in the venturi passage 31 and into which the piston valve 25 is inserted. In the carburetor body 24, a fuel introducing passage 34 is formed which downwards and vertically extends from the venturi passage 31 such that the fuel introducing passage 34 is formed coaxially with the cylinder portion 33. Moreover, a jet needle 36 provided for the piston valve 25 and to be described later is inserted into the fuel introducing passage 34. The carburetor body 24 has a fuel-introducing portion 35 formed integrally with the fuel introducing passage 34 and extending into the chamber 23.

The piston valve 25 formed into an elliptic cylindrical shape having a bottom is inserted into the valve chamber 32 formed in the cylinder portion 33, the piston valve 25 being inserted in a direction perpendicular to a direction in which sucked air flows in the venturi passage 31. The piston valve 25 is made to be slidable with respect to the cylinder portion 33 and held by the cylinder portion 33 such that the axis of movement of the piston valve 25 is not shifted. The piston valve 25 vertically moves in the valve chamber 32 so that the area of passage of the venturi passage 31 is changed. Thus, the amount of sucked air which flows in the venturi passage 31 is adjusted.

A piston valve 25 formed into a cylindrical shape having a bottom to correspond to the cylinder portion 33 is mounted on the upper opening in the cylinder portion 33. Thus, the valve chamber 32 formed in the cylinder portion 33 is closed. A spring 27 is disposed between the cover 26 and the piston valve 25. The spring 27 urges the piston valve 25 in a direction in which the venturi passage 31 is closed.

An engaging portion 33a for preventing movement of the piston valve 25 in the closing direction is formed at the upper opening of the cylinder portion 33. To correspond to the engaging portion 33a, a flange portion 25a is formed at the upper opening of the piston valve 25. When the piston valve 25 is, by the spring 27, urged in the direction in which the venturi passage 31 is closed, the flange portion 25a and the engaging portion 33a are engaged to each other. Therefore, when no force is added to the piston valve 25 in the direction in which the venturi passage 31 is opened, the piston valve 25 is maintained at a position at which the venturi passage 31 is closed maximally. The opening of the piston valve 25 at the foregoing position is called an "idling opening".

A jet needle 36 is disposed on the outside of the bottom surface of the piston valve 25. The jet needle 36 is inserted into the fuel introducing passage 34 downwards and vertically formed with respect to the venturi passage 31 so as to be moved vertically to follow the movement of the piston valve 25. The foregoing jet needle 36 adjusts the amount of fuel which is sucked from the chamber 23 into the venturi passage 31.

When the foregoing conventional carburetor 21 is applied to, for example, a motorcycle, an end of a throttle cable is engaged to the bottom portion of the piston valve 25. Another end of the throttle cable is connected to an accelerator grip. When the accelerator grip is operated, the piston valve 25 is vertically moved so that the passage area of the venturi passage 31 is changed between a fully closed state to a fully opened state. Moreover, the amount of fuel which is sucked into the venturi passage 31 is adjusted. Thus, fuel can be mixed with sucked air in the carburetor 21 so that a mixture is supplied to the engine. Thus, the rotational speed of the engine can be varied.

In the above-mentioned carburetor 21, the venturi passage 31 is not completely closed even if the piston valve 25 is in the state of the idling opening. Therefore, fuel is sucked from the chamber 23 into the venturi passage 31 in a predetermined quantity. Therefore, the foregoing carburetor 21 is able to supply, to the engine, sucked air with which fuel in a predetermined quantity has been mixed in the state in which the piston valve 25 is in the idling opening state.

The conventional carburetor 21 is provided with an opening detection portion for detecting the opening of the piston valve 25.

The opening detection portion incorporates a permanent magnet 41 disposed at the lower end of the piston valve 25 and a detection unit 42 disposed on the outer surface of the insulating wall of the cylinder portion 33 and provided with first to third magnet sensors 43 to 45.

The permanent magnet 41 is disposed at the lower end of the piston valve 25 in a direction perpendicular to a direction a in which sucked air flows in the venturi passage 31. The permanent magnet 41 is moved in parallel with the central axis of the piston valve 25 when the piston valve 25 is moved.

The detection unit 42 is disposed in contact with the outer surface of the insulating wall of the cylinder portion 33. The detection unit 42 includes the first to third magnet sensors 43 to 45. The first to third magnet sensors 43 to 45 are disposed opposite to the permanent magnet 41 provided for the piston valve 25 such that the insulating wall is interposed. The first to third magnet sensors 43 to 45 are disposed in a line in parallel with the axial direction of the piston valve 25 such that the first to third magnet sensors 43 to 45 are disposed opposite to the permanent magnet 41 when the permanent magnet 41 has been vertically moved to follow the piston valve 25. Specifically, when the opening of the piston valve 25 is made to be a first opening at which the piston valve 25 is closed maximally, a second opening in which the same is furthermore opened and a third opening in which the same is furthermore opened, the first to third magnet sensors 43 to 45 are disposed opposite to the permanent magnet 41.

In the above-mentioned opening detection portion, when the opening of the piston valve 25 has been changed, the magnet sensors corresponding to the first, second and third openings detect the magnetic field of the permanent magnet 41. When the permanent magnet 41 is disposed adjacent to, for example, the first opening the first magnet sensor 43 is turned on. When the permanent magnet 41 is disposed adjacent to the second opening, the second magnet sensor 44 is turned on. When the permanent magnet 41 is disposed adjacent to the third opening, the third magnet sensor 45 is turned on.

Thus, the carburetor 21 to which the conventional apparatus for detecting the opening of the throttle valve disclosed in Japanese Patent Laid-Open No. 7-317571 is applied is able to detect the three steps of the opening of the piston valve 25. When an output denoting a result of the detection is supplied to a control circuit or the like, for example, the ignition timing of the engine can be controlled.

However, the foregoing conventional carburetor 21 is able to unsatisfactorily detect only the three steps of the opening of the piston valve 25, that is, in the stepped manner. Therefore, the opening of the piston valve 25 cannot furthermore precisely be detected. Since the magnetic sensors perform the turning on/of operations, intense change in the outputs of the sensors is made in the vicinity of the change points at which the output of each sensor is changed between on and off if the piston valve 25 is, for example, oscillated. Therefore, control of the ignition timing of the engine cannot accurately be performed. Thus, the output cannot be enlarged and the fuel economy cannot be improved.

To accurately detect the state of the opening of the piston valve 25, a mechanism for adjusting the positions at which the detection unit 42 and the permanent magnet 41 are joined must be provided. Therefore, the cost of the carburetor 21 cannot be reduced and the number of processes for manufacturing the carburetor 21 cannot be decreased.

## Disclosure of the Invention

In view of the foregoing state of the conventional magnetic displacement detection apparatus, an object of the present invention is to provide an apparatus for magnetically detecting an absolute amount of displacement which is capable of solving the problems experienced with the conventional methods, simplifying the circuit structure, reducing the size and cost of the apparatus and with which an effective length can be elongated as compared with an ineffective length.

That is, an object of the present invention is to provide a magnetic displacement detection apparatus which is capable of accurately detecting an absolute amount of displacement.

Another object of the present invention is to provide a magnetic displacement detection apparatus with which the clearance between a sensor and a portion which must be detected can be elongated.

Another object of the present invention is to provide a magnetic displacement detection apparatus having a simple circuit structure and enabling the size and cost of the detection apparatus to be reduced.

Another object of the present invention is to provide a magnetic displacement detection apparatus which is capable of elongating the effective length and permitting a limited space to be used effectively because of the elongated effective length as compared with the ineffective length.

Another object of the present invention is to provide a magnetic displacement detection apparatus which has satisfactory durability and which can be applied to a machine or the like which is oscillated violently.

Another object of the present invention is to provide a magnetic displacement detection apparatus exhibiting high response speed.

Another object of the present invention is to provide a magnetic displacement detection apparatus arranged to improve the linearity of the output from the sensor to be capable of accurately detecting an absolute amount of displacement.

In view of the foregoing state of the conventional apparatus for detecting the opening of a carburetor, an object of the present invention is to provide an apparatus for detecting the opening of a carburetor which is capable of accurately detecting the opening of a valve over the opening region of the valve with a simple structure.

A magnetic displacement detection apparatus according to the present invention comprises: a magnetic-field detection portion incorporating an impedance-change magnetic sensor having two magnetization sensing portions each having impedance which is changed in accordance with the intensity of an external magnetic field; a portion which must be detected and which has magnetic-field generating means for generating a magnetic field which is continuously changed in a direction in which relative movement with respect to the magnetic-field detection portion is performed; an oscillation circuit portion for exciting and operating the magnetic sensor; and a detection circuit portion for obtaining an output signal formed by converting change in the impedance of the magnetic sensor occurring in accordance with the intensity of the external magnetic field applied from the magnetic-field generating means into an electric signal, wherein an absolute amount of displacement between the magnetic-field detection portion and the portion which must be detected is detected in response to the output signal.

For example, the magnetic displacement detection apparatus according to the present invention has a structure that the magnetic-field detection portion has the two magnetization sensing portions disposed apart from each other in the direction in which the relative movement with respect to the portion which must be detected is performed, and the detection circuit portion detects the difference between changes in the impedance of the two magnetization sensing portions so as to obtain the output signal.

For example, the magnetic-field detection portion has the two magnetization sensing portions which are disposed at the same position in the direction in which the relative movement with respect to the portion which must be detected is performed, and the detection circuit portion detects the difference between changes in the impedance of the two magnetization sensing portions so as to obtain the output signal. A direction in which the magnetic-field generating means is magnetized and a direction in which the magnetic-field detection portion senses magnetization are in parallel with each other.

For example, the magnetic-field detection portion has the two magnetization sensing portions which are disposed at the same position in a direction perpendicular to the direction in which relative movement with respect to the portion which must be detected is performed.

For example, the magnetic-field detection portion incorporates an impedance change magnetic sensor having two coils which are the two magnetization sensing portions and which are wound around a core made of the material having the high magnetic permeability. As an alternative to this, the magnetic-field detection portion incorporates an impedance change magnetic sensor having two amorphous magnetic wires which are the two magnetization sensing portions.

For example, the portion which must be detected has two magnetic-field generating means which are disposed apart from each other while the magnetic sensor is interposed in the direction in which the relative movement with respect to the magnetic-field detection portion is performed, the two magnetic-field generating means being disposed in a state in which the directions of magnetization of the two magnetic-field generating means are opposite to each other.

For example, the two magnetic-field generating means are disposed such that the directions of magnetization of the two magnetic-field generating means are in parallel with the direction in which the relative movement with respect to the magnetic-field detection portion is performed. As an alternative to this, the two magnetic-field generating means are disposed such that the directions of magnetization of the two magnetic-field generating means is perpendicular to the direction in which the relative movement with respect to the magnetic-field detection portion is performed.

For example, the two magnetic-field generating means are magnetically connected to each other by a material having high magnetic permeability.

For example, the magnetic-field generating means of the portion which must be detected includes two magnetic poles positioned adjacent to each other and having magnetic pole surfaces having opposite polarities has a length not shorter than an effective length for detecting the absolute amount of displacement, the magnetic-field generating means and the portion which must be detected are moved relatively in a state in which the boundary between the two magnetic poles of the magnetic-field detection portion is, by a predetermined angle, inclined from the direction in which the relative movement with respect to the magnetic-field detection portion is performed and the length of the magnetic-field generating means in the direction in which the relative movement is performed is not shorter than the effective length.

According to the present invention, there is provided an apparatus for detecting the opening of a carburetor having a carburetor body including a venturi passage and a valve chamber opened in the venturi passage and an area-variable valve slidably disposed in the valve chamber and capable of varying the area of the venturi passage, the apparatus for detecting the opening of a carburetor comprising: magnetic-field generating means for generating a magnetic field which is continuously changed over the range in which the area-variable valve is moved; magnetic-field detection portion incorporating an impedance-change magnetic sensor having two magnetization sensing portions each of which is made of a material having high magnetic permeability and impedance which is changed in accordance with the intensity of an external magnetic field; an oscillation circuit portion for exciting and operating the magnetic sensor; and a detection circuit portion for obtaining an output signal formed by converting change in the impedance of the magnetic sensor occurring in accordance with the intensity of the external magnetic field applied from the magnetic-field generating means into an electric signal, wherein the magnetic-field generating means and the magnetic-field detection portion are provided for the carburetor body and the area-variable valve such that the relative positions are changed when the area-variable valve is moved.

For example, the apparatus for detecting the opening of a carburetor has a structure that the magnetic-field generating means incorporates two magnetic-field generating portions magnetized in a direction perpendicular to a direction in which the area-variable valve is slid, the two magnetic-field generating portions have magnetic pole surfaces having opposite polarities and disposed apart from each other for a distance not shorter than a distance for which the area-variable valve is moved

For example, the magnetic-field generating means has two magnetic pole surfaces magnetized opposite to each other with respect to a boundary which intersects a locus of relative movement of the magnetic-field detection portion.

Brief Description of the Drawings

FIG. 1 is a diagram showing a conventional displacement detection apparatus;
FIG. 2 is a diagram showing another conventional displacement detection apparatus;
FIG. 3 is a diagram showing another conventional displacement detection apparatus;
FIG. 4 is a diagram showing another conventional displacement detection apparatus;
FIG. 5 is a side view showing a conventional apparatus for detecting the opening of a carburetor;
FIG. 6 is a cross sectional view showing the conventional apparatus for detecting the opening of a carburetor;
FIG. 7 is a front view showing an embodiment of a magnetic displacement detection apparatus according to the present invention;
FIG. 8 is a front view showing an example of the structure of a magnetic sensor for use in the magnetic displacement detection apparatus;
FIGS. 9A and 9B are diagrams showing an example of the structure of a permanent magnet serving as an external magnetic-field generating means in the magnetic displacement detection apparatus, in which FIG. 9A is a front view and FIG. 9B is a side view;
FIG. 10 is a circuit diagram showing an example of the structures of an oscillation circuit portion and a detection circuit portion of the magnetic displacement detection apparatus;
FIG. 11 is a graph showing an example of displacement-output characteristic realized in the magnetic displacement detection apparatus;
FIG. 12 is a graph showing an example of the relationship between the intensity of a magnetic field and the impedance of a coil;
FIG. 13 is a front view showing another example of the structure of the magnetic sensor;
FIG. 14 is a front view showing another example of the structure of the magnetic sensor;

FIG. 15 is a front view showing a modification of the magnetic displacement detection apparatus shown in FIG. 1;

FIG. 16 is a front view showing another embodiment of the magnetic displacement detection apparatus according to the present invention;

FIG. 17 is a graph showing the relationship between the distance from the magnetic-field generating means and an output from each coil;

FIGS. 18A and 18B are diagram showing a modification of the magnetic displacement detection apparatus shown in FIG. 16, in which FIG. 18A is a front view and 18B is a plan view;

FIGS. 19A and 19B are diagrams showing another example of the structure of the permanent magnet serving as the external magnetic-field generating means of the magnetic displacement detection apparatus according to the present invention, in which FIG. 19A is a front view and FIG. 19B is a side view;

FIG. 20 is a front view showing another embodiment of the magnetic displacement detection apparatus according to the present invention;

FIG. 21 is a front view showing another embodiment of the magnetic displacement detection apparatus according to the present invention;

FIGS. 22A and 22B are diagrams showing another embodiment of the magnetic displacement detection apparatus according to the present invention, in which FIG. 22A is a perspective view and 22B is a front view;

FIGS. 23A and 23B are diagrams showing another example of the structure of the magnetic sensor, in which FIG. 23A is a cross sectional view and 23B is a plan view;

FIGS. 24A and 24B are diagrams showing another example of the structure of the permanent magnet, in which FIG. 24A is a front view and FIG. 24B is a side view;

FIG. 25 is a perspective view showing another embodiment of the magnetic displacement detection apparatus according to the present invention;

FIG. 26 is a perspective view showing another embodiment of the magnetic displacement detection apparatus according to the present invention;

FIG. 27 is a front view showing another embodiment of the magnetic displacement detection apparatus according to the present invention;

FIG. 28 is a graph showing an example of displacement-output characteristic realized in the magnetic displacement detection apparatus shown in FIG. 27;

FIG. 29 a front view showing another embodiment of the magnetic displacement detection apparatus according to the present invention;

FIG. 30 is a front view showing another embodiment of the magnetic displacement detection apparatus according to the present invention;

FIGS. 31A and 31B are diagrams showing another embodiment of the magnetic displacement detection apparatus according to the present invention, in which FIG. 31A is a perspective view and FIG. 31B is a front view;

FIG. 32 is a front view showing a modification of the position of the coil of the magnetic sensor of the magnetic displacement detection apparatus according to the present invention;

FIGS. 33A and 33B are diagrams showing an example of the structure of a magnet serving as an external magnetic-field generating means of the portion which must be detected and which is provided for the magnetic displacement detection apparatus according to the present invention, in which FIG. 33A is a front view and FIG. 33B is a side view;

FIGS. 34A and 34B are diagrams showing the positional relationship between the magnetic sensor of the magnetic-field detection portion and the magnet of the portion which must be detected according to another embodiment of the magnetic displacement detection apparatus of the present invention, in which FIG. 34A is a front view and FIG. 34B is a side view;

FIGS. 35A and 35B are diagrams showing an example of the structure of the magnetic sensor of the magnetic displacement detection apparatus according to the present invention, in which FIG. 35A is a front view of the core and FIG. 35B is a front view of the magnetic sensor;

FIG. 36 is a diagram showing an example of the structure of a circuit portion of the magnetic displacement detection apparatus according to the present invention;

FIG. 37 is a graph showing an example of an output characteristic of the detection circuit portion;

FIGS. 38A and 38B are graphs showing a result of a measurement of the relationship between the relative movement distance and the output of the sensor such that the result of the magnetic displacement detection apparatus according to a comparative example and that of the embodiment of the present invention are subjected to a comparison, in which FIG. 38A shows a result of the measurement of the comparative example and FIG. 38B shows a result of the measurement of the embodiment of the present invention;

FIG. 39 is a graph showing a linearity error of an output of each sensor, a result of measurement of which is shown in FIGS. 38A and 38B;

FIGS. 40A and 40B are diagrams showing a modification of the structure of the magnet of the external magnetic-field generating means of the portion which must be detected and which is provided for the magnetic displacement detection apparatus according to the present invention, in which FIG. 40A is a front view and FIG. 40B is a side view;

FIGS. 41A and 41B are diagrams showing a modification of the structure of the magnet of the external magnetic-field generating means of the portion which must be detected and which is provided for the magnetic displacement detection apparatus according to the present invention, in which FIG. 41A is a front view and FIG. 41B is a side view;

FIGS. 42A and 42B are diagrams showing a modification of the structure of the magnet of the external magnetic-field generating means of the portion which must be detected and which is provided for the magnetic displacement detection apparatus according to the present invention, in which FIG. 42A is a side view and FIG. 42B is a side view;

FIG. 43 a diagram showing an applicable example of the magnetic displacement detection apparatus according to the present invention and shown in FIGS 34A and 34B;

FIG. 44 is a partially-cut perspective view showing a gauge including the magnetic displacement detection apparatus according to the present invention;

FIGS. 45A and 45B are diagrams showing the structure of the magnetic displacement detection apparatus mounted on the gauge shown in FIG. 44, in which FIG. 45A is a front view and FIG. 45B is a side view;

FIGS. 46A and 46B are diagrams showing the structure of the magnetic sensor of the magnetic displacement detection apparatus mounted on the gauge, in which FIG. 46A is a front view of the core and FIG. 46B is a front view of the magnetic sensor;

FIG. 47 is a graph showing displacement-magnetic field characteristic realized in the magnetic displacement detection apparatus mounted on the gauge;

FIG. 48 is a partially-cut perspective view showing the gauge on which the magnetic displacement detection apparatus according to the present invention is mounted;

FIGS. 49A and 49B are diagrams showing the structure of the magnetic displacement detection apparatus according to the present invention, in which FIG. 49A is a plan view and FIG. 49B is a side view;

FIG. 50 is a graph showing displacement-magnetic field characteristic realized in the magnetic displacement detection apparatus mounted on the gauge shown in FIG. 48;

FIG. 51 is a diagram showing an example of the position of the magnetic sensor of the magnetic displacement detection apparatus according to the present invention;

FIG. 52 is a diagram showing another example of winding of the coil of the magnetic sensor of the magnetic displacement detection apparatus according to the present invention;

FIG. 53 is a diagram showing another example of the magnetic sensor of the magnetic displacement detection apparatus according to the present invention;

FIG. 54 is a side view showing a carburetor to which the present invention is applied;

FIG. 55 is a cross sectional view of the carburetor;

FIGS. 56A and 56B are diagrams showing the structure of a magnetic sensor of the carburetor, in which FIG. 56A is a front view of a core and FIG. 56B is a front view of the magnetic sensor;

FIG. 57 is a perspective view showing a magnet for use in the carburetor;

FIG. 58 is a diagram showing the positions of the magnetic sensor and the magnet provided for the carburetor;

FIG. 59 is a diagram showing the positional relationship between the magnetic sensor and the magnet;

FIG. 60 is a graph showing the output characteristic of the magnetic sensor with respect to a piston valve of the carburetor;

FIGS. 61A and 61B are diagrams showing the positions of the other magnetic sensor and the magnet provided for the carburetor, in which FIG. 61A is a front view and FIG. 61B is a side view;

FIG. 62 is a side view showing another carburetor to which the present invention is applied;

FIG. 63 is a Gross sectional view showing the carburetor shown in FIG. 62;

FIG. 64 is diagram showing a magnet for use in the carburetor;

FIGS. 65A, 65B and 65C are diagrams showing the positions of the magnetic sensor and magnets provided for the carburetor, in which FIG. 65A is a front view, FIG. 65B is a plan view and FIG. 65C is a side view; and

FIG. 66 is a graph showing an output characteristic of the magnetic sensor with respect to the piston valve of the carburetor.

Best Mode For Carrying Out the Invention

Best modes for carrying out the invention will now be described with reference to the drawings.

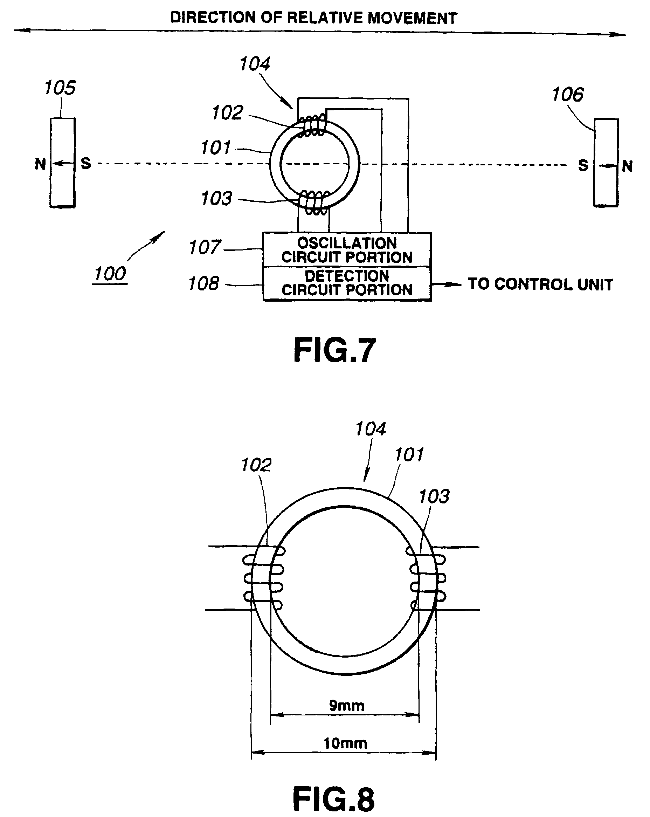

FIGS. 7 to 12 show an embodiment of a magnetic displacement detection apparatus according to the present invention.

A magnetic displacement detection apparatus 100 according to this embodiment, for example, as shown in FIG. 7, incorporates a magnetic-field detection portion comprising a impedance change type magnetic sensor 104; a portion which must be detected and which comprises permanent magnets 105 and 106 serving as magnetic-field generating means for generating magnetic fields which are continuously changed in a direction of relative movement with respect to the magnetic-field detection portion; an oscillating circuit portion 107 for exciting and operating the magnetic sensor 104; and a detection circuit portion 108 for extracting an output signal obtained by converting change in the impedance of the magnetic sensor 104 corresponding to the intensities of external magnetic fields supplied from the permanent magnets 105 and 106 into an electric signal.

As shown in FIG. 8, the magnetic sensor 104 forms a closed magnetic circuit by winding coils 102 and 103 around a ring core 101 at opposite positions. The core 101 is made of, for example, Permalloy PC and structured such that the outer and inner diameters of the ring portion are 10 mm and 9 mm, respectively. Moreover, the thickness of the core is 50 $\mu$m. Each of the coils 102 and 103 is formed by winding a copper wire, for example, 50 times, the copper wire having a diameter of 0.08 mm.

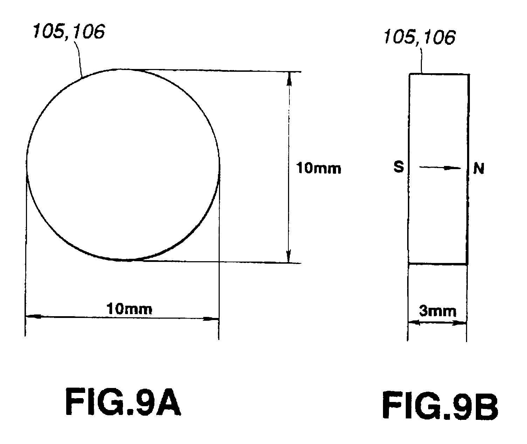

As shown in FIGS. 9A and 9B, the magnetic displacement detection apparatus 100 has two magnetic-field generating means by cylindrical permanent magnets (for example, SmCo) 105 and 106 magnetized in their thickness directions. The sizes of the permanent magnets 105 and 106 are determined such that the diameter and the thickness are 10 mm and 3 mm, respectively.

As shown in FIG. 7, the magnetic displacement detection apparatus 100 is arranged such that the permanent magnets 105 and 106 are disposed with respect to either of two members (not shown) of a machine tool or a precise measuring apparatus which are moved relatively. The permanent magnets 105 and 106 are disposed apart from each other for a predetermined distance in the direction of the relative movement. Moreover, the center of the circle is placed on the same straight line in the direction of the relative movement. In addition, the same poles (the south poles in the structure shown in FIG. 7) faces each other. That is, the magnetizing directions are made to be in parallel with the direction of the relative movement and made to be opposite to each other. The permanent magnets 105 and 106 and the known means for joining the permanent magnets 105 and 106 to the above-mentioned member form the portion which must be detected. The elements except for the permanent magnets 105 and 106 are omitted from illustration.

The magnetic sensor 104 is joined to the other member of the two members such that the center of the ring core 101 is positioned between the permanent magnets 105 and 106. Moreover, the foregoing center is placed on a line connecting the centers of the circular permanent magnets 105 and 106. Moreover, the plane including the foregoing ring shapes is made to be in parallel with the direction of the relative movement. The positions of the coils 102 and 103 of the magnetic sensor 104 are made such that the positions of the coils 102 and 103 are the same in the direction of the relative movement. That is, the distance from the permanent magnets 105 and 106 to the coil 102 and the distance from the permanent magnets 105 and 106 to the coil 103 are the same. The magnetic sensor 104, the known means for joining the magnetic sensor 104 to the foregoing residual member, a casing and the like form a magnetic-field detection portion. The elements except for the magnetic sensor 104 are omitted from illustration.

An oscillating circuit portion 107 for oscillating and operating the coils 102 and 103 and a detection circuit portion 108 for receiving an output signal from the magnetic sensor 104 are connected to the magnetic sensor 104.

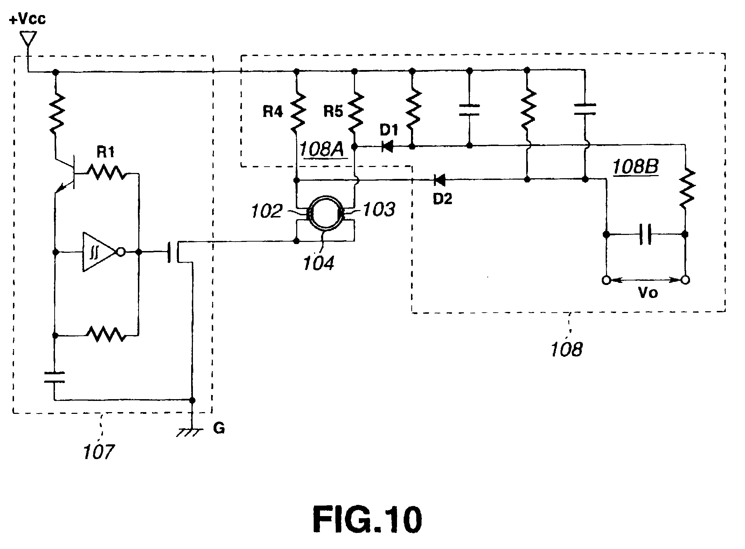

Examples of the structures of the oscillating circuit portion 107 and the detection circuit portion 108 are shown in FIG. 10.

The oscillating circuit portion 107 has a structure formed by applying a multivibrator circuit and comprising resistors, capacitors and switching transistors. The oscillating circuit portion 107 is arranged to supply, to the coils 102 and 103, pulse-wave voltage having a frequency of about 1 MHZ and peak level difference of 5 V. The duty ratio of the pulse wave is determined by a resistor R1 shown in FIG. 10. In this embodiment, the duty ratio is set to be about 1/10. The oscillating circuit portion 107 comprises a Schmitt inverter IC having a hysteresis so that chattering is removed.

As an alternative to the pulse waves, sine wave voltage may be applied to the coils 102 and 103. If the pulse waves are supplied, adjustment of the duty ratio enables the power consumption to be reduced. If the sine waves are supplied, a DC bias must be applied. Therefore, it is preferable that the pulse waves are employed.

The detection circuit portion 108 has a bridge circuit 108A constituted by the coils 102 and 103 of the magnetic sensor 104 and resistors R4 and R5. Thus, the bridge circuit 108A is able to obtain an unbalanced voltage output corresponding to change in the impedance of each of the coils 102 and 103. The unbalanced voltage output of the bridge circuit is wave-detected by diodes D1 and D2. Outputs denoting results of the wave detection are smoothed by a CR smoothing circuit 108B comprising a resistor and a capacitor. Thus, differential output Vo of the change in the voltage is obtained which occurs because of change in the voltage made by the change in the impedance of the coil 102 and change in the voltage made by the change in the impedance of the coil 103. The absolute amount of displacement is detected in accordance with the differential output Vo of the change in the voltage occurring because of changes in the impedance of each of the two coils 102 and 103. As a result, influence exerted from the outside can be prevented and thus detection can accurately be performed. Since the impedance of each of the coils 102 and 103 is changed considerably, the detection circuit portion 108 has no amplifier which amplifies the output signal. Thus, the structure of the detection circuit portion 108 can be simplified.

Since the basic structures and the principles of the oscillating circuit portion 107 and the detection circuit portion 108 are known, they are omitted from description.

An output from the detection circuit portion 108 is supplied to a control unit (not shown). In the control unit adapted to a known method so that the absolute amount of displacement between the magnetic-field detection portion and the portion which must be detected is detected.

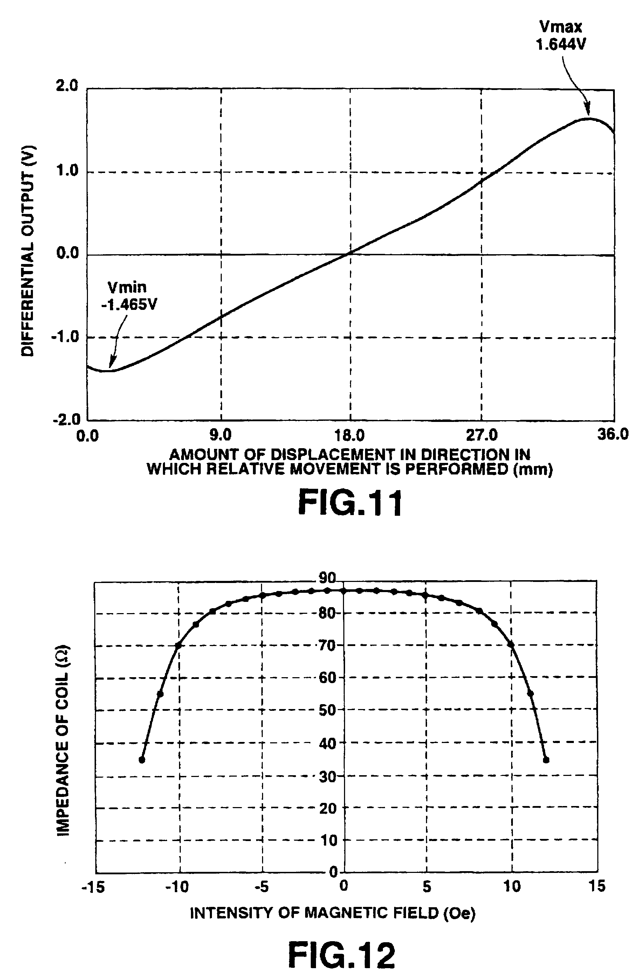

In the magnetic displacement detection apparatus having the above-mentioned structure, the relationship (displacement-output characteristic) between amounts of displacement of the magnetic sensor 104 in the direction of the relative movement and levels of the differential output of the detection circuit portion 108 is realized, for example, as shown FIG. 11. The position at which an amount of displacement of 18.0 mm is observed corresponds to a position at which the distance from the permanent magnet 105 to the center of the ring core 101 and the distance from the permanent magnet 106 to the center of the ring core 101 are the same. Since the external magnetic field applied from the permanent magnet 105 and the external magnetic field applied from the permanent magnet 106 in an opposite direction have the same intensities, the levels of the output of the coil 102 and that of the coil 103 are made to be the same. Therefore, the level of the differential output is made to be zero. Also FIG 11 shows a fact that the differential output is changed with a considerably high linearity with respect to the foregoing position. Also the foregoing fact enables the absolute amount of displacement to accurately be detected.

That is, the magnetic displacement detection apparatus according to this embodiment has the structure that the two permanent magnets 105 and 106 having opposite directions of magnetization are disposed apart from each other in a direction in which the relative movement with respect to the magnetic-field detection portion is performed. As a result, a magnetic field generated between the magnetic-field generating means is made to be bilaterally symmetrical with respect to same distance from the two permanent magnets 105 and 106. Moreover, the magnetic field is changed with a considerably high linearity in accordance with the position in the direction in which the relative movement is performed.

When the coils 102 and 103 of the magnetic sensor 104 disposed between the permanent magnets 105 and 106 are excited and operated by the oscillating circuit portion 107, the magnetic permeability of the core 101 with respect to the external magnetic field is changed. Thus, the impedance of each of the coils 102 and 103 is changed. Therefore, a signal corresponding to the external magnetic field is transmitted from the coil. Therefore, the external magnetic field generated by the permanent magnets 105 and 106 are distributed as described above. Therefore, a signal which is changed with a high linearity in accordance with the position in the direction in which the relative movement is performed is received from the magnetic sensor 104 by the detection circuit portion 108. As a result, the absolute amount of displacement between the magnetic-field detection portion and the portion which must be detected can accurately be detected.

The coil-type magnetic sensor 104 has considerably high sensitivity. Thus, the impedance of the magnetic sensor 104 is changed even with a magnetic field similar to that of a geomagnetism. FIG. 12 shows an example of the relationship between the intensity of the magnetic field and the impedance of the coil. The impedance of the coil is changed by about 10 % with respect to one oersted (Oe) of the amount of change in the magnetic field. Thus, a fact can be understood that the impedance of the coil is changed by about 50 % when the magnetic field is changed from about - 12 oersted to + 12 oersted. Since the magnetic sensor 104 has the high sensitivity, a weak magnetic field, which cannot be detected by an MR (magnetic resistance) device or a Hall device which is usually employed to detect a magnetic field, can be detected. Therefore, a magnetic field imposed from the magnetic-field generating means can reliably be detected even at a position distant from the magnetic-field generating means. Thus, an output corresponding to the intensity of the magnetic field can be obtained. Therefore, a resistor set to an appropriate value to correspond to the impedance is selected to obtain a bridge output. Thus, a large output which is not required to be amplified by an amplifier can be obtained.

On the other hand, methods except for the above-mentioned coil type method require an amplifier of the foregoing type. Moreover, a multiplicity of complicated circuits which are required for the above-mentioned magnetostrictive line method are not required. Therefore, the circuit structure can be simplified and the overall size and cost of the detection apparatus can easily be reduced.

Since the long ineffective length portion, which exists with the above-mentioned differential transformer method, does not exist, a long effective length can be provided as compared with the ineffective length. Since the non-contact structure is employed differently from the above-mentioned resistance-type potentiometer method, satisfactory durability can be realized and thus application to a machine which is oscillated violently is permitted. Moreover, reduction in the response speed which takes place with the above-mentioned magnetostrictive line method can be prevented. When the frequency for operating the coil is made to be a high frequency, for example, tens of kHz to several MHZ, the impedance of the coil can easily be raised without a necessity of changing the impedance change characteristic with respect to the external magnetic field. Therefore, the impedance can easily be adjusted to be adaptable to the peripheral circuits. Since the response speed depends on the operating frequency (the response speed is about 1/10 time the operating frequency), employment the high frequency further raises the response speed. Therefore, the absolute amount of displacement can be detected very quickly.

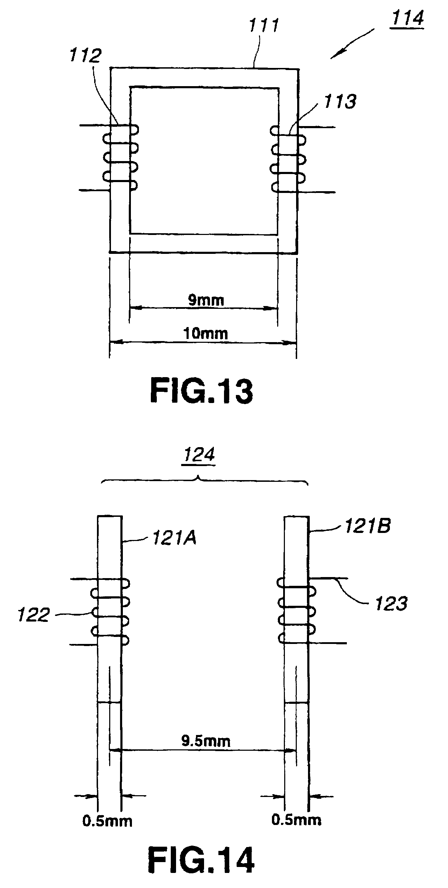

As an alternative to the structure of the magnetic sensor 104 of the magnetic-field detection portion shown in FIG. 8, a magnetic sensor 114 as shown in FIG. 13 may be employed. The magnetic sensor 114 is formed by winding the coils 112 and 113 around opposite two sides of a rectangular ring core 111. A magnetic sensor 124 as shown in FIG. 14 may be employed. The magnetic sensor 124 is formed by winding coils 122 and 123 around two parallel rod-shape cores 121A and 121B disposed apart from each other. The material and thickness of the cores 111, 121A and 121B and the material and the number of windings of the coils 112, 113, 121 and 122 may be the same as those of the core 101 and the coils 102 and 103 shown in FIG. 8.

The magnetic-field generating means of the portion which must be detected may be an arbitrary means (for example, an electromagnet) except for the permanent magnet. The material of the core of the magnetic sensor may be a material, such as amorphous, having high magnetic permeability.

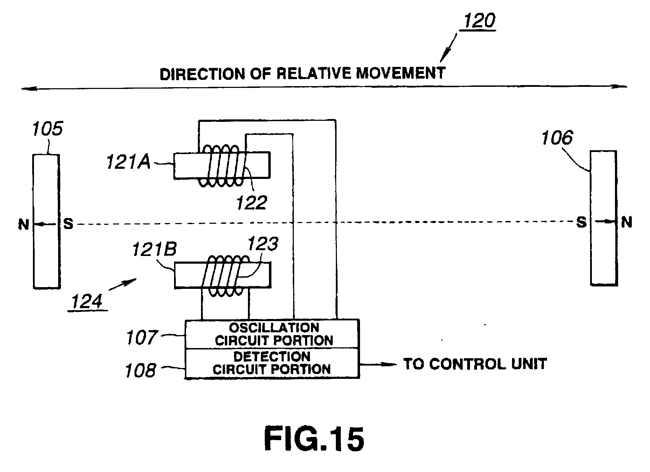

A modification will now be described which is formed by employing a magnetic sensor 124 having a structure as shown in FIG. 14 in the embodiment shown in FIGS. 7 to 12. A magnetic displacement detection apparatus 120 according to the modification shown in FIG. 15 incorporates a magnetic sensor 124 of a magnetic-field detection portion which comprises two rod-shape cores 121A and 121B around which coils 122 and 123 are wound and which are disposed apart from each other for a predetermined distance and in parallel with the direction in which the magnetic-field detection portion and the portion which must be detected are relatively moved.

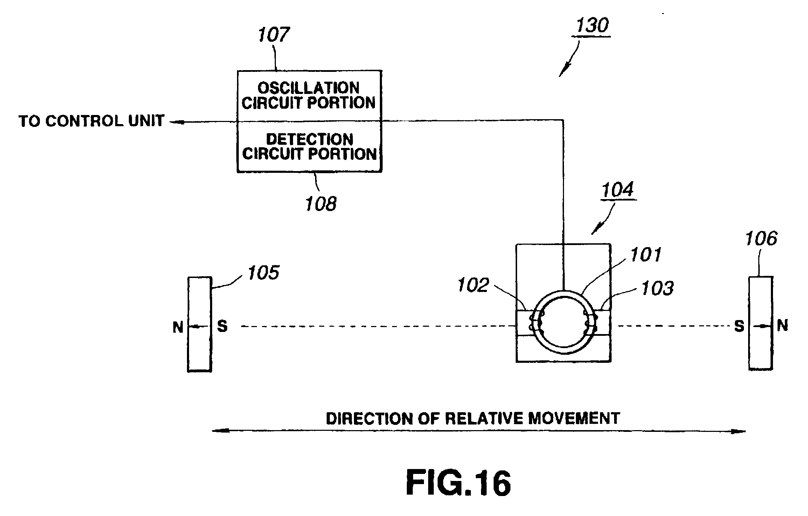

FIG. 16 shows another embodiment of the magnetic displacement detection apparatus according to the present invention.

A magnetic displacement detection apparatus 130 according to this embodiment and incorporating a magnetic sensor 104 is joined to either of two members (not shown) of a machine tool or a precise measuring apparatus which are moved relatively. The magnetic sensor 104 is joined at a position interposed between the permanent magnets 105 and 106 such that the center of the ring core 101 is positioned on a line which Connects the centers of the circles of the permanent magnets 105 and 106 to each other. Moreover, the plane including the foregoing ring shape is made to be in parallel with the direction in which the relative movement is performed. The coils 102 and 103 of the magnetic sensor 104 are positioned such that the coils 102 and 103 are disposed apart from each other in the direction in which the relative movement is performed. Moreover, the coils 102 and 103 are positioned at the same position in a direction perpendicular to the direction in which the relative movement is performed. The magnetic sensor 104, the known means for joining the magnetic sensor 104 to the other member, a casing and the like form a magnetic-field detection portion. Since the structures of the other portions may be the same as those of the embodiment shown in FIGS. 7 to 12, the same elements are given the same reference numerals and the same elements are omitted from description.

Also the above-mentioned magnetic displacement detection apparatus 130 having the above-mentioned structure realizes the relationship (displacement-output characteristic) between amounts of displacement of the magnetic sensor 104 in the direction of the relative movement and levels of the differential output of the detection circuit portion 108, as shown in FIG. 11. That is, the position at which an amount of displacement of 18.0 mm is observed and which corresponds to a position at which the distance from the permanent magnet 105 to the center of the ring core 101 and the distance from the permanent magnet 106 to the center of the ring core 101 are the same, the external magnetic field applied from the permanent magnets 105 and 106 to the coil 102 and the external magnetic field applied to the coil 103 have the same intensity and opposite directions. Therefore, the output of the coil 102 and that of the coil 103 have the same level. Therefore, the level of the differential output is made to be zero. Thus, the differential output is changed with a high linearity. Therefore, the absolute amount of displacement can accurately be detected.

In the magnetic displacement detection apparatus 130, when the coils 102 and 103 of the magnetic sensor 104 are excited and operated by the oscillation circuit portion 107, the magnetic permeability of the core 101 with respect to the external magnetic field is changed. Therefore, the impedance of each of the coils 102 and 103 is changed so that a signal corresponding to the external magnetic field is transmitted. Since the two coils 102 and 103 are disposed apart from each other in the direction in which the relative movement with respect to the portion which must be detected is performed, the intensity of the magnetic field which is applied from the magnetic-field generating means to the coils 102 and 103 is weakened at the coil more distant from the magnetic-field generating means as compared with the magnetic field which is applied to the coil adjacent to the magnetic-field generating means. Therefore, even at a position at the output from a coil more adjacent to the magnetic-field generating means has been saturated because the magnetic sensor 104 approaches the magnetic-field generating means, the output of the coil distant from the magnetic-field generating means is not saturated. Therefore, even at the position near the magnetic-field generating means, the absolute amount of displacement can be detected in accordance with the differential output of the coils Therefore, the effective length can be elongated.

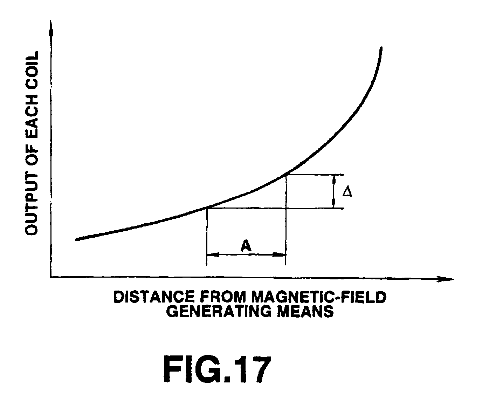

Since the intensity of the magnetic field generated by the magnetic-field generating means is changed in a curve in accordance with the distance from the magnetic-field generating means, also the output of each of the coils 102 and 103 is changed in a curve in accordance with the distance from the magnetic-field generating means as schematically shown in FIG. 17 which shows the characteristics of the outputs. Therefore, the differential output (for example, differential output $\Delta$ corresponding to a predetermined distance A shown in FIG. 17) between the coils 102 and 103 is changed with remarkable linearity in accordance with the position of the magnetic sensor 104 in the direction in which the relative movement is performed. As a result, the absolute amount of displacement between the magnetic-field detection portion and the portion which must be detected can accurately be detected.

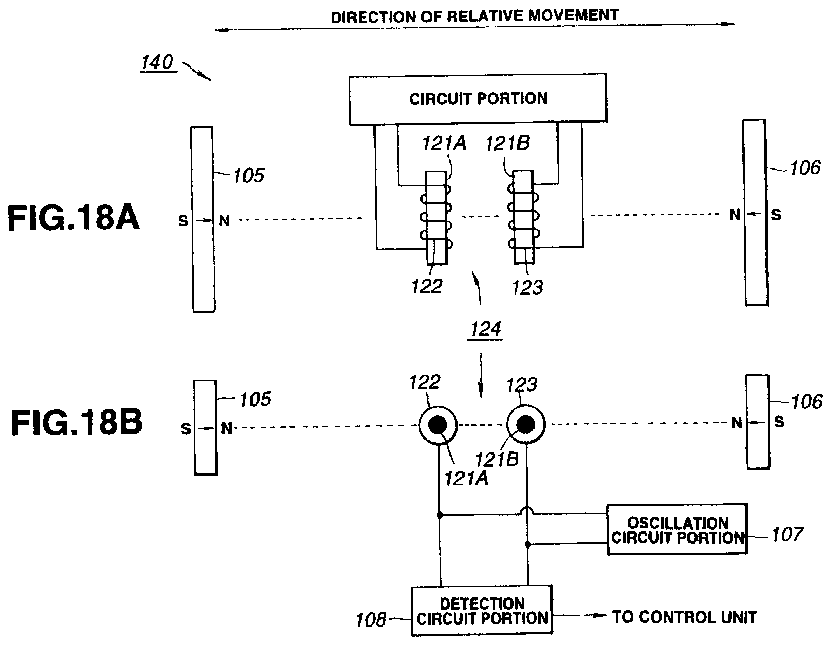

A modification formed by modifying the embodiment shown in FIG. 16 such that the magnetic sensor 124 structured as show in FIG. 14 is employed will now be described with reference to FIGS. 18A and 18B. A magnetic displacement detection apparatus 140 according to this modification has a structure that the magnetic sensor 124 of the magnetic-field detection portion has two rod-shape cores 121A and 121B around which coils 122 and 123 are wound and which are disposed in parallel with each other and apart from each other in a direction perpendicular to a direction in which the magnetic-field detection portion and the portion which must be detected are relatively moved.

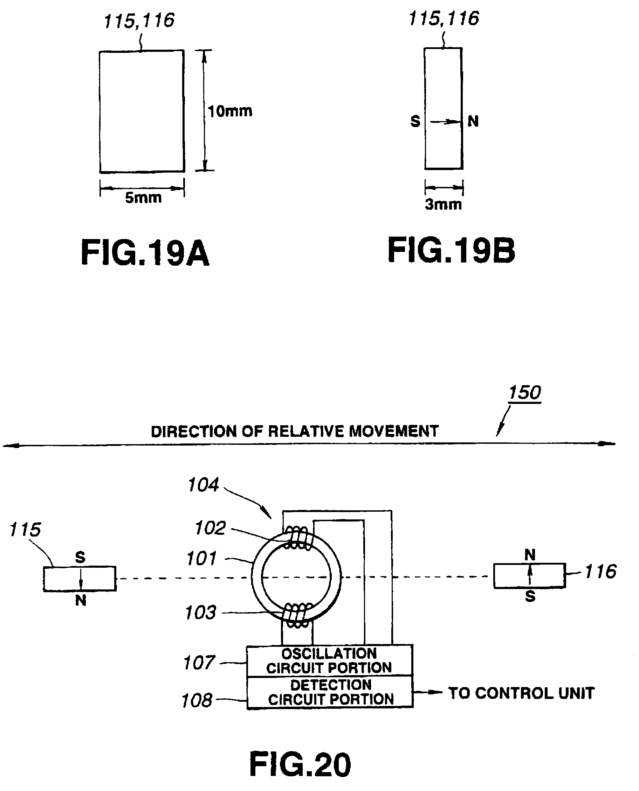

FIGS. 19A, 19B and 20 show another embodiment of the magnetic displacement detection apparatus according to the present invention.

A magnetic displacement detection apparatus 150 according to this embodiment, as shown in FIGS. 19A and 19B, has a structure that permanent magnets 115 and 116 magnetized in their thickness directions and formed into flat plates form two magnetic-field generating means. The dimensions of the permanent magnets 115 and 116 are, for example, 10 mm long, 5 mm wide and 3 mm thick.

The permanent magnets 115 and 116 are disposed such that their magnetized directions are made to be different from those of the permanent magnets 105 and 106 shown in FIG. 1. That is, the permanent magnets 115 and 116 are disposed such that their magnetized directions are made to be opposite to each other in a direction perpendicular to a direction in which the relative movement is performed. As a result, the lengthwise direction of the coils 102 and 103 of the magnetic sensor 104 and the direction of the magnetic field generated by the permanent magnets 115 and 116 are made to be perpendicular to each other. Since the other structures may be the same as those according to the embodiment shown in FIGS. 7 to 12, the same elements are given the same reference numerals and the same elements are omitted from description.

Since the lengthwise direction of the coils 102 and 103 and the direction of the magnetic field are made to be perpendicular to each other as described above, the amount of magnetic fluxes which are introduced into the lengthwise direction of the coils 102 and 103 at the position at which the magnetic sensor 104 has approached the permanent magnets 115 and 116 is considerably reduced as compared with that introduced in the structure according to the embodiment shown in FIG. 7. As a result, the structure shown in FIG. 7 results in saturation being prevented even at the position at which the outputs of the coils 102 and 103 are saturated and no change in the impedance takes place. Therefore, change in the impedance takes place. Thus, the effective length, that is, the absolute amount of displacement which can be detected can be enlarged as compared with the structure shown in FIG. 7.

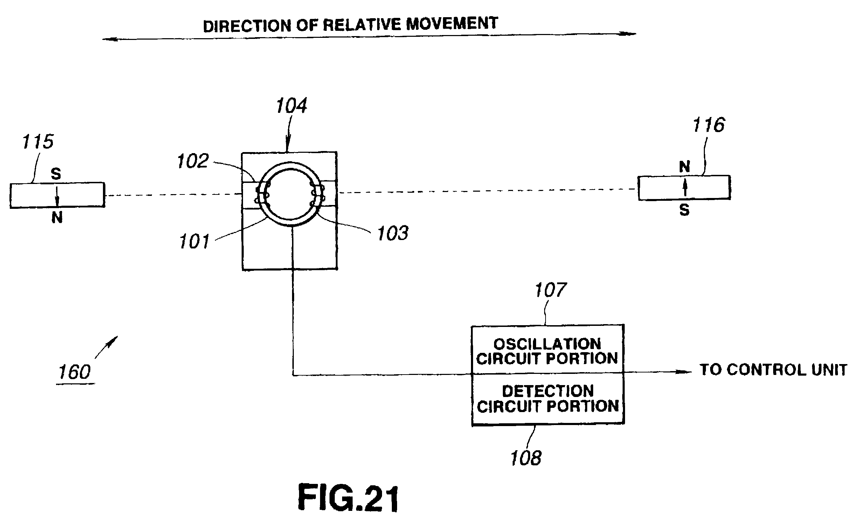

FIG. 21 shows another embodiment of the magnetic displacement detection apparatus according to the present invention.

A magnetic displacement detection apparatus 160 according to this embodiment has a structure that the permanent magnets 115 and 116 are disposed such that their magnetized directions are made to be opposite to each other and in a direction perpendicular to the direction in which the relative movement is performed. The coils 102 and 103 of the magnetic sensor 104 are disposed apart from each other in the direction in which the relative movement is performed. The coils 102 and 103 are disposed at the same position in the direction perpendicular to the direction in which the relative movement is performed. The magnetic sensor 104, the known means for joining the magnetic sensor 104 to the other member, a casing and so forth form the magnetic-field detection portion. The elements except for the magnetic sensor 104 are omitted from illustration. Since the structures of the other elements may be the same as those according to the embodiment shown in FIGS. 19 and 20, the same elements are given the same reference numerals and the same elements are omitted from description.

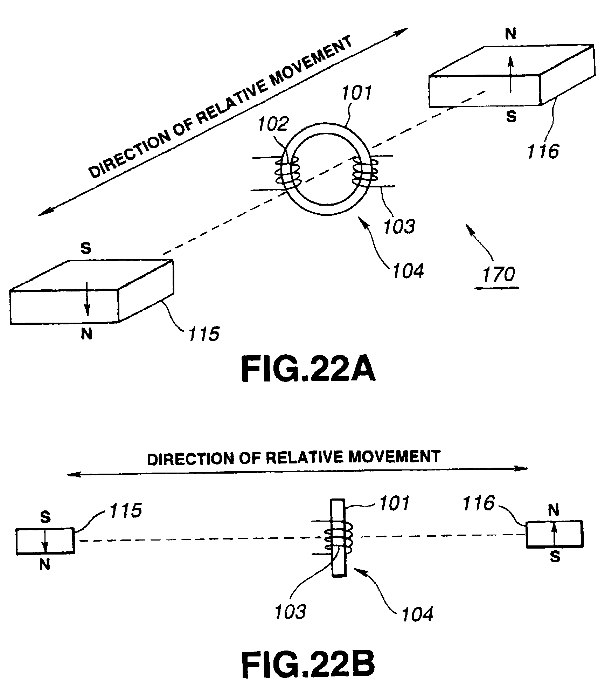

FIGS. 22A and 22B show another embodiment of the magnetic displacement detection apparatus according to the present invention.

A magnetic displacement detection apparatus 170 according to this embodiment is different from the embodiments shown in FIG. 7 and 20 in the position of the magnetic sensor 104. That is, the magnetic sensor 104 is disposed such that the plane including the ring shape is made to be perpendicular to the direction in which the relative movement is performed. The permanent magnets 115 and 116 are disposed similarly to those according to the embodiment shown in FIG. 20. The structures of the other elements may be the same as those according to the embodiments shown in FIGS. 7 to 12. Therefore, the same elements are omitted from description. Also the oscillation circuit portion and the detection circuit portion are omitted from illustration.

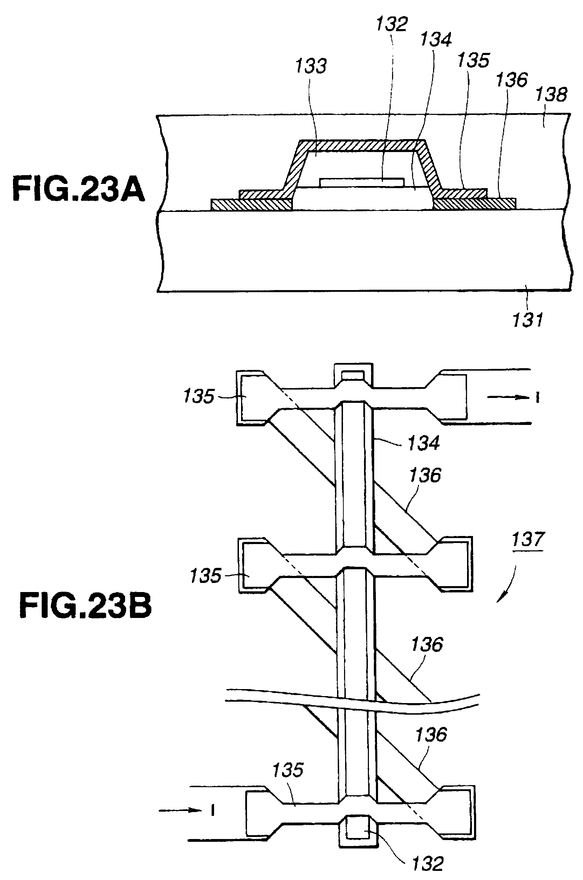

FIGS. 23 to 25 show another embodiment of the magnetic displacement detection apparatus according to the present invention.

A magnetic displacement detection apparatus 180 according to this embodiment, as shown in FIGS. 23A and 23B, has a structure that an elongated and thin member 132 (corresponding to the core) having high-magnetic-permeability is, on a substrate 131, disposed between insulating films 133 and 134. A plurality of elongated and thin upper electrodes 135 are disposed apart from each other at positions above the insulating film 133 such that the upper electrodes 135 are formed perpendicular to the member 132 having high magnetic permeability. A plurality of elongated and thin lower electrodes 136 are disposed below the insulating film 134 such that the two ends of the lower electrodes 136 overlap the ends of the two adjacent upper electrodes 135, the lower electrodes 136 being formed diagonally with respect to the member 132 having high magnetic permeability. The ends of the upper electrodes 135 and the ends of the lower electrodes 136 are connected to each other so that a thin coil 137 is formed around the member 132 having high magnetic permeability. A protective film 138 is formed on the coil 137.

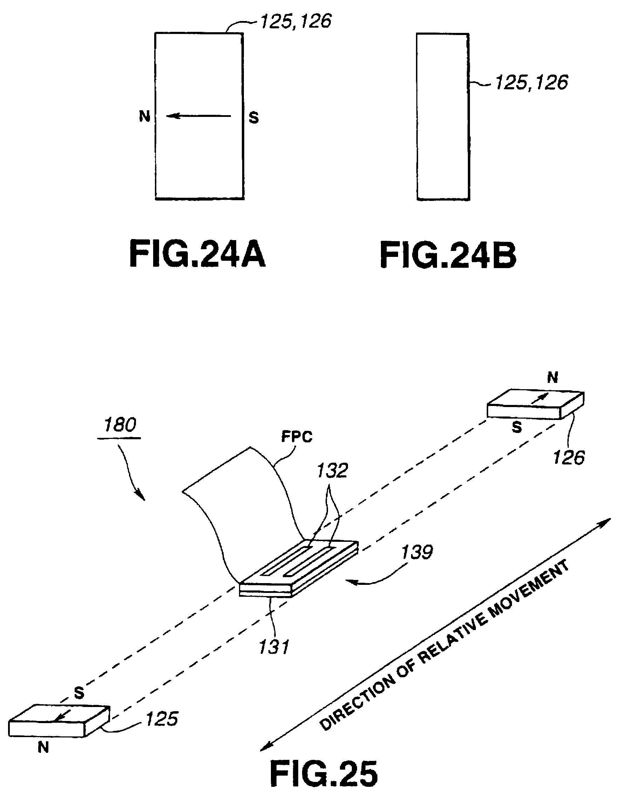

Since two parallel members 132 each of which has high magnetic permeability and around which the coil 137 is wound are disposed on the substrate 131, a thin magnetic sensor 139 is constituted as show in FIG. 25.

The plate-like permanent magnets 125 and 126 magnetized in a direction in parallel with the surface of the plate as show in FIGS. 24A and 24B constitute two magnetic-field generating means.

The permanent magnets 125 and 126 are, as shown in FIG. 25, joined to either of the two members (not shown) which are relatively moved. The permanent magnets 125 and 126 are joined apart from each other for a predetermined distance such that the their surfaces are in parallel with each other and the same poles (the south pole in the structure shown in FIG. 25) face each other. The magnetic sensor 139 is joined to the other member of the foregoing two members such that the surface of the substrate 131 is in parallel with the surfaces of the permanent magnets 125 and 126. Moreover, the lengthwise direction of the member 132 having high magnetic permeability is in parallel with the direction in which the relative movement is performed. The magnetic sensor 139 and the oscillation circuit portion and the detection circuit portion (not shown) are connected to each other through a thin and flexible printed cable FPC. The structures of the other elements may be the same as those according to the embodiments shown in FIGS. 7 to 12.

As shown in FIG. 25, this embodiment has the structure that the thickness of the magnetic-field detection portion incorporating the magnetic sensor 139 is reduced. Since the size of the magnetic displacement detection apparatus 180 on the plane perpendicular to the direction in which the relative movement is performed depends on the size of the magnetic-field detection portion, the overall thickness of the apparatus can be reduced. As a result, the size of the magnetic displacement detection apparatus can furthermore be reduced.

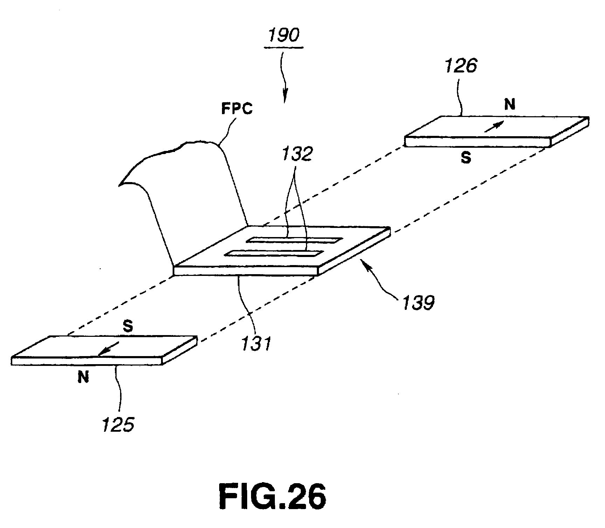

A magnetic displacement detection apparatus 190 shown in FIG. 26 may be employed which incorporates the magnetic sensor 139 which is joined to the other member of the two members such that the surface of the substrate 131 is in parallel with the surfaces of the permanent magnets 125 and 126 and the direction in which the relative movement is performed is made to be perpendicular to the lengthwise direction of the member 132 having high magnetic permeability.

The above-mentioned embodiments have the structure that the two magnetic-field generating means are provided for the portion which must be detected. Embodiments having one magnetic-field generating means which is provided for the portion which must be detected will now be described.

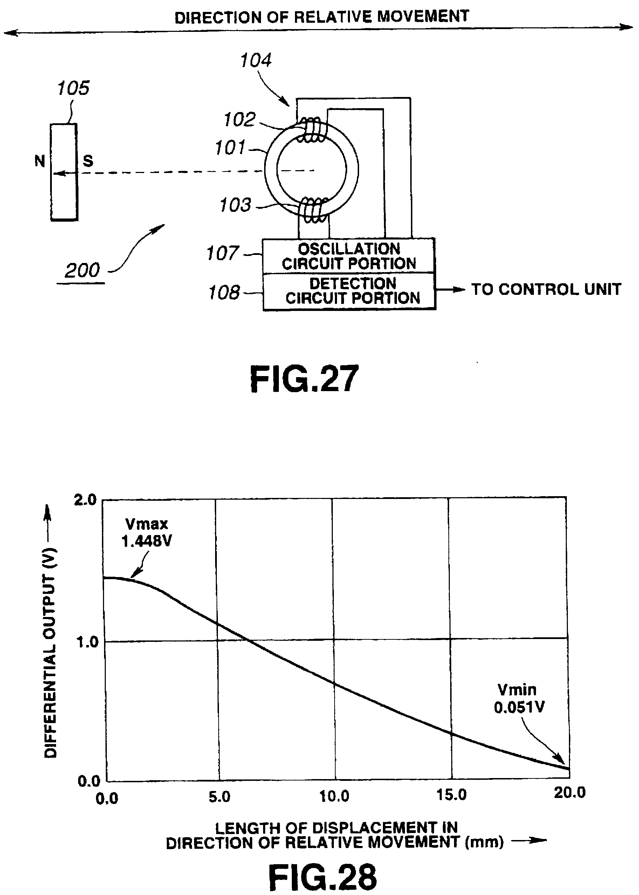

FIG. 27 shows an embodiment structured such that the number of the magnetic-field generating means of the embodiment shown in FIG. 7 is made to be one.

A magnetic displacement detection apparatus 200 according to the embodiment show in FIG. 27 has a structure that one permanent magnet 105 (structured as shown in FIGS. 9A and 9B) is joined to either of two members (not shown) which are moved relatively. The one permanent magnet 105 is joined such that the direction of magnetization is in parallel with the direction in which the relative movement is performed. Moreover, the magnetic sensor 104 (structured as shown in FIG. 8) is joined to the other member of the two members such that the center of the circular permanent magnet 105 and the center of the ring core 101 are positioned on the same straight line in the direction in which the relative movement is performed. In addition, the plane including the circle and the ring shape and the direction in which the relative movement is performed are made to be in parallel with each other.

The coils 102 and 103 of the magnetic sensor 104 are disposed such that the positions of the coils 102 and 103 are the same in the direction in which the relative movement is performed. That is, the distance from the permanent magnet 105 to the coil 102 and the distance from the permanent magnet 105 to the coil 103 are the same. An oscillation circuit portion 107 for exciting and operating the coils 102 and 103 and a detection circuit portion 108 for obtaining an output signal from the magnetic sensor 104 are connected to the magnetic sensor 104. The structures of the oscillation circuit portion 107 and the detection circuit portion 108 are the same as those shown in FIG. 10.

In the magnetic displacement detection apparatus 200 having the above-mentioned structure, the relationship (displacement-output characteristic) between the amount of displacement of the magnetic sensor 104 in the direction in which the relative movement is performed and the differential output of the detection circuit portion 108 is realized, for example, as shown in FIG. 28. If the number of the magnetic-field generating means is made to be one, the differential output is changed with somewhat remarkable linearity as shown in FIG. 28.

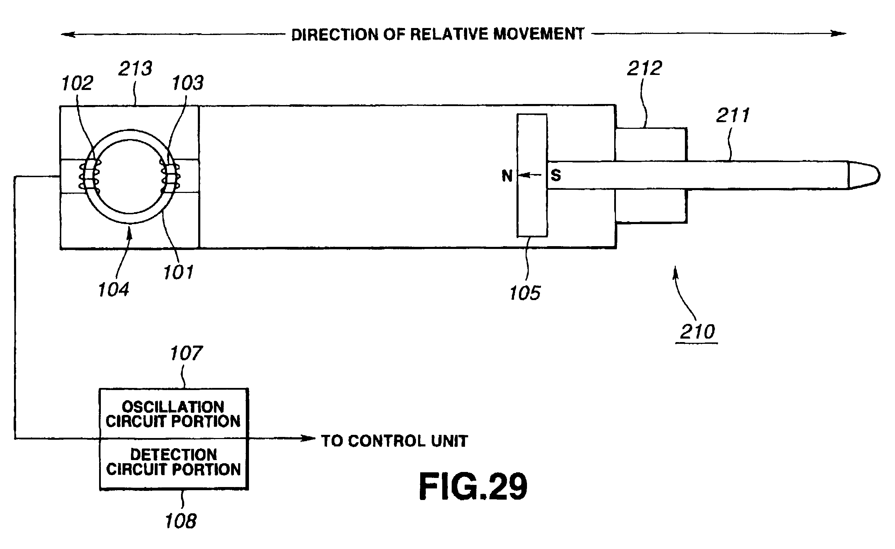

An embodiment having a structure in which the embodiment shown in FIG. 16 is changed such that the number of the magnetic-field generating means is made to be one will now be described with reference to FIG. 29.

A magnetic displacement detection apparatus 210 according to this embodiment, as specifically shown in FIG. 29, has a structure that a rod 121 extending in the direction in which the relative movement is performed is joined to either of two members of a machine tool or a precise measuring apparatus. A permanent magnet 105 is joined to the leading end of the rod 121. That is, a portion which must be detected and which has the permanent magnet 105 and the rod 211 is joined to the foregoing member. The permanent magnet 105 is disposed such that the direction of the magnetization is in parallel with the direction in which the relative movement is performed. Moreover, a case 213 into which the rod 211 is movably inserted in the lengthwise direction through a bearing 212 is joined to the other member of the two members. The magnetic sensor 104 is joined in the case 213 such that the center of the circular permanent magnet 105 and the center of the ring core 101 are positioned in line in the direction in which the relative movement is performed. Moreover, the plane including the circle and the direction in which the relative movement is performed are in parallel with each other. That is, the magnetic-field detection portion incorporating the magnetic sensor 104, the bearing 212 and the case 213 is joined to the other member.

The coils 102 and 103 of the magnetic sensor 104 are positioned such that the coils 102 and 103 are apart from each other in the direction in which the relative movement is performed. Moreover, the coils 102 and 103 are positioned at the same position in the direction perpendicular to the direction in which the relative movement is performed. That is, the lengthwise direction of the coils 102 and 103 is perpendicular to the direction in which the relative movement is performed. As a result, the lengthwise direction of the coils 102 and 103 and the direction of the magnetic field generated by the permanent magnet 105 are made to be perpendicular to each other.

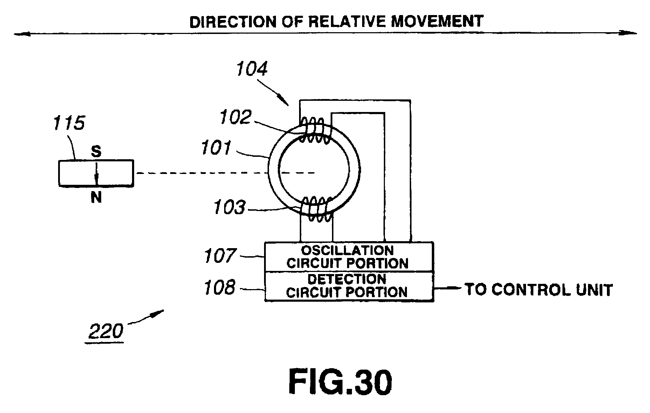

FIG. 30 shows an embodiment which is structured such that the embodiment shown in FIGS. 19 and 20 is changed such that the number of the magnetic-field generating means is made to be one.

A magnetic displacement detection apparatus 220 according to this embodiment has a structure that one permanent magnet 115 (having the structure shown in FIGS. 19A and 19B) is disposed such that the direction of the magnetization of the permanent magnet 115 is different from that of the permanent magnet 105 according to the embodiment shown in FIG. 27. That is, the permanent magnet 115 is disposed such that the direction of the magnetization of the permanent magnet 115 is perpendicular to the direction in which the relative movement is performed. As a result, the lengthwise direction of the coils 102 and 103 of the magnetic sensor 104 and the direction of the magnetic field generated by the permanent magnet 115 are made to be perpendicular to each other. Since the structures of the other elements may be the same as those according to the embodiment shown in FIG. 27, the same elements are given the same reference numerals and the same elements are omitted from description.

As described above, the lengthwise direction of the coils 102 and 103 and the direction of the magnetic field are made to be perpendicular to each other. Thus, at the position at the magnetic sensor 104 has approached the permanent magnet 115, the amount of the magnetic fluxes which are introduced into the lengthwise direction of the coils 102 and 103 can be reduced considerably as compared with the structure shown in FIG. 27. As a result, in the case shown in FIG. 27, saturation is prevented and impedance is changed even at the position at which the outputs of the coils 102 and 103 are saturated and thus change in the impedance does not take place. Therefore, the effective length can be elongated as compared with the case shown in FIG. 27.

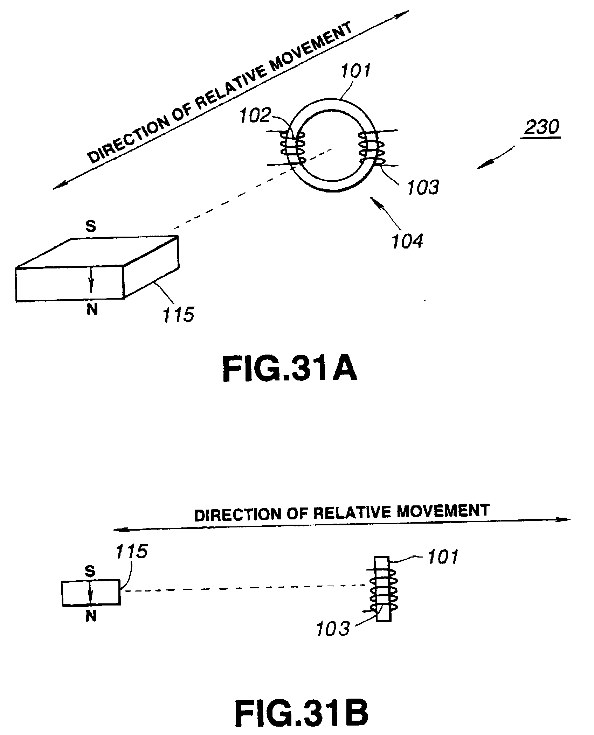

FIG. 31 shows an embodiment structured such that the embodiment shown in FIG. 22 is changed such that the number of the magnetic-field generating means is made to be one.

A magnetic displacement detection apparatus 230 according to this embodiment incorporates the magnetic sensor 104 disposed at a position different from that of the same according to the embodiment shown in FIGS. 27 and 30. That is, the magnetic sensor 104 is disposed such that the plane including the circle is made to be perpendicular to the direction in which the magnetic-field detection portion and the portion which must be detected are relatively moved. The permanent magnet 115 is disposed similarly to that according to the embodiment shown in FIG. 30. The structures of the other elements may be the same as those according to the embodiment shown in FIG. 27. Therefore, the same elements are omitted from description. Also the oscillation circuit portion and the detection circuit portion are omitted from illustration.

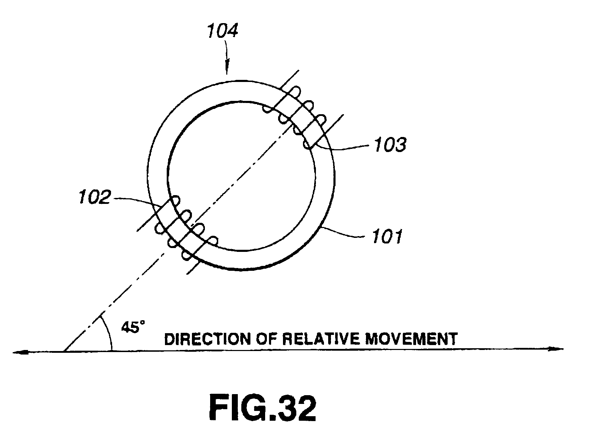

The other embodiments may be structured such that the number of the magnetic-field generating means is made to be one. As well as the structure in which the coils 102 and 103 of the magnetic sensor 104 are disposed apart from each other in the direction in which the relative movement is performed, the coils 102 and 103 may be disposed apart from each other in the direction perpendicular to the direction in which the relative movement is performed. For example, as shown in FIG. 32, the lengthwise direction of the coils 102 and 103 are inclined with respect to the direction in which the relative movement is performed by an angle of 45 degrees as show in FIG. 32.

An embodiment will now be described which is structured such that the linearity of the output of the magnetic sensor is furthermore improved so as to further accurately detect the absolute amount of displacement.

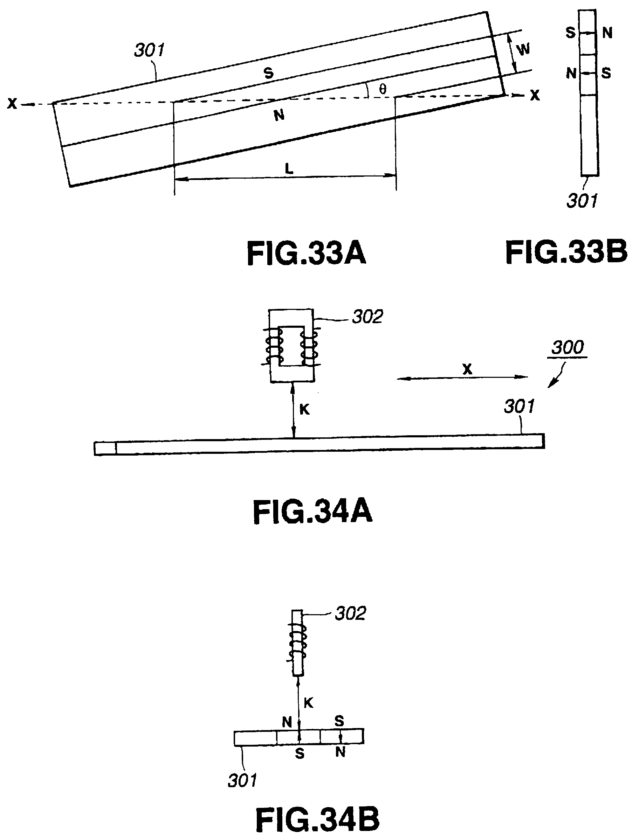

FIGS. 33 to 39 show an embodiment of the magnetic displacement detection apparatus according to the present invention.

A magnetic displacement detection apparatus 300 according to this embodiment incorporates a magnetic-field generating means structured as shown in FIGS. 33A and 33B. That is, FIGS. 33A and 33B show an example of a magnetic-field generating means provided for the portion which must be detected and which is included in the magnetic displacement detection apparatus 300. FIG. 33A is a plan view, and FIG. 33B is a side view. The magnetic-field generating means according to this embodiment is made of a thin-plate-like magnet 301 (which is a permanent magnet, such as a rubber magnet, a ferrite magnet, an alloy magnet or the like) having a length not shorter than a detection effective length (a length required for a user) L for detecting the absolute amount of displacement of the magnetic displacement detection apparatus. The right-hand portion and a right-half portion of the surface of the magnet 301 with respect to the central line in the lengthwise direction are magnetized to have opposite polarities. As a result, the magnet 301 includes two magnetic poles which are positioned adjacently and which have magnetic pole surfaces having opposite polarities.

The magnet 301 is joined to either of two members (not shown) of a machine tool or the like which must be detected, the two members being moved relatively. The magnet 301 is joined such that the lengthwise direction of the magnet 301 is inclined by an angle $\theta$ from the axis in which the relative movement is performed. Moreover, the length of the magnet 301 on the relative movement axis X is not shorter than the effective length L. Note that the effective length L is defined to be the distance from a position at which either of the magnetic poles on the widthwise direction and the relative movement axis X intersect to a position at which the center of the other magnetic pole in the widthwise direction and the relative movement axis X intersect. The angle $\theta$ is an angle set in a range satisfying $0 < \theta \leq \tan^{-1}(w/L)$ when an assumption is made that the distance between the centers of the two magnetic poles is w.

The magnet 301, the known means for joining the MAGNET 301 to the member constitute portion which must be detected. The elements except for the magnet 301 are omitted.

A magnetic sensor 302 of the magnetic-field detection portion is disposed on a plane which is in parallel with the relative movement axis X with respect to the magnet 301 shown in FIGS. 33A and 33B and as well as perpendicular to the sheet on which the drawing is drawn. FIGS. 34A and 34B show the relationship between the positions of the magnetic sensor 302 and the magnet 301 when viewed from another viewpoint. FIG. 34A is a front view and FIG. 34B is a side view. The magnetic sensor 302 is joined to the other member of the two members of the machine tool or the like which are moved relatively such that a clearance of distance k is maintained from the magnet 301. The magnetic sensor 302, the known means for joining the magnetic sensor 302 to the other member, a casing and the like constitute the magnetic-field detection portion. The elements except for the magnetic sensor 302 are omitted from illustration.

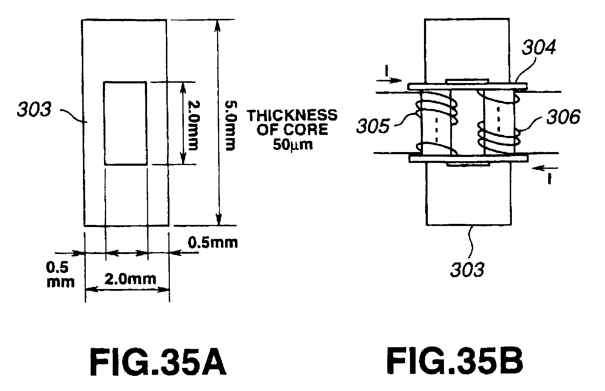

A specific example of the structure of the magnetic sensor 302 is shown in FIGS. 35A and 35B. That is, a rectangular ring core 303 (made of a magnetic material, such as Permalloy, having outer and inner diameters of 5 mm and 2 mm in the vertical direction, outer and inner diameters of 2 mm and 1 mm in the lateral direction and a thickness of 50 $\mu$m) forming a closed magnetic circuit as shown in FIG. 35A has coils 305 and 306 wound around a bobbin 304 by a predetermined number of times (for example, 50 times) as shown in FIG. 35B. Thus, a core-type magnetic sensor 302 is constituted. The foregoing core-type magnetic sensor 302 enables the cost to be reduced and the structure to be simplified as compared with the other magnetic sensor using the MR device, the FG device or the Hall device.

The reason why two coils are provided for the magnetic sensor 302 lies in that the difference between signals from two coils is attempted to be obtained in a detection circuit portion to be described. Moreover, influence of electric noise is attempted to be canceled to obtain a further precise output.

Since the shape of the core of the magnetic sensor 302 is required to permit the two coils to be wound, the shape is not limited to the rectangular ring shape as shown in FIGS. 35A and 35B. For example, a circular and ring shape or a structure in which coils are wound around two parallel rod-like cores disposed apart from a predetermined distance may be employed.

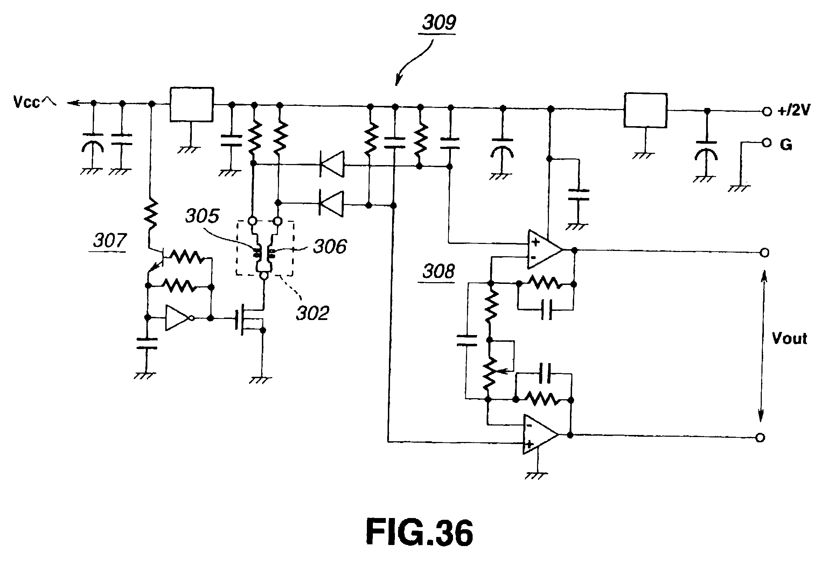

FIG. 36 shows an example of a circuit portion 309 incorporating an oscillation circuit portion 307 for exciting and operating the coils 305 and 306 of the magnetic sensor 302 and a detection circuit portion 308 for receiving an output signal from the magnetic sensor 302. The oscillation circuit portion 307 is formed by applying the multivibrator circuit and arranged to generate pulse wave voltage having a level difference of 12 V between peaks, a frequency of about 1 MHZ and a duty ratio of 1/10 so as to apply the pulse wave voltage to the coils 305 and 306. The detection circuit portion 308 incorporates a bridge circuit to detect the difference in the DC outputs obtained by rectifying the signals supplied from the coils 305 and 306.

Since the basic structures and principles of the oscillation circuit portion 307 and the detection circuit portion 308 are known, they are omitted from description. An output from the detection circuit portion is supplied to a control unit (not shown). In the control unit adapted to a known method, the absolute amount of displacement between the magnetic-field detection portion and the portion which must be detected is obtained.

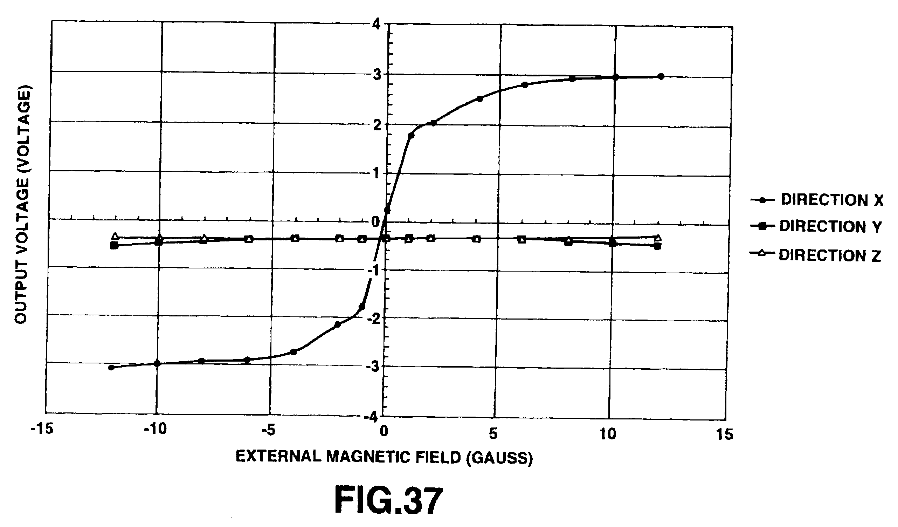

FIG. 37 shows an example of an output characteristic (the relationship between the intensity of the external magnetic field and the output voltage) of the detection circuit portion 308 when the coils 305 and 306 of the magnetic sensor 302 is excited and operated by the oscillation circuit portion 307 of the circuit portion 309.

When the effective length L is considerably longer than the distance w between the centers of the magnetic poles shown in FIG. 33, the angle $\theta$ is considerably reduced because of the foregoing relationship $0 < \theta \le \tan^{-1} (w/L)$. Moreover, the linearity of the change in the magnetic field becomes remarkable at the position adjacent to the point (the boundary between the two magnetic poles) at which the magnetic pole is changed as compared with the position adjacent to the center of the magnetic pole. Therefore, the magnetic sensor which is provided for the magnetic-field detection portion must be capable of detecting further fine change in the magnetic field at the point at the magnetic pole is changed. As shown in FIG. 37, the magnetic sensor 302 detects only a component of the magnetic field which is made incident in the lengthwise direction (in the direction X shown in FIG. 33) of the coils 305 and 306. Moreover, change in the impedance takes place even if the magnetic field is weak similarly to the geomagnetism. Therefore, the magnetic sensor 302 has sensitivity with which the fine change in the magnetic field at the foregoing point at which the magnetic pole is changed can satisfactorily be detected.

Since the magnetic displacement detection apparatus 300 has the structure that the two magnetic poles included in the magnet 301 are positioned adjacent to each other, considerably remarkable linearity of the change in the magnetic field between the magnetic poles is realized.

When the magnetic-field detection portion and the portion which must be detected are moved relatively, the magnetic sensor 302 detects a magnetic field which is changed with remarkable linearity from either of the two magnetic poles of the magnet 301 having the effective length L on the relative movement axis X to the other magnetic pole.

As a result, an output signal having remarkable linearity over the effective length L is obtained from the magnetic sensor 302. Also the output of the detection circuit portion 308 has remarkable linearity.

When the clearance k between the magnet 301 and the magnetic sensor 302 is shortened, the linearity of the output is made to furthermore be remarkable. However, the magnetic field generated from the magnet 301 and applied to the magnetic sensor 302 is intensified. Thus, the magnetic sensor 302 can easily be saturated. In this case, the effective length L cannot be elongated. When the clearance k is elongated, the linearity of the output deteriorates. However, the magnetic field generated by the magnet 301 and applied to the magnetic sensor 302 is weakened. In this case, the magnetic sensor 302 cannot easily be saturated. As a result, the effective length L can be elongated.

Therefore, it is preferable that the clearance k is determined appropriately in accordance with the intensity of the magnetic field of the magnet 301 and the sensitivity of the magnetic sensor 302. An example sample was measured which had a structure that a rubber magnetic having a length of 50 mm, a width of 10 mm and a thickness of 0.7 mm was employed as the magnet 301 and the length of the clearance k was varied under condition that the effective length L was not shorter than 30 mm. As a result, the linearity of the output was improved most significantly when setting was performed such that k = 10 ± 2 mm and the angle $\theta$ = 2 degrees.

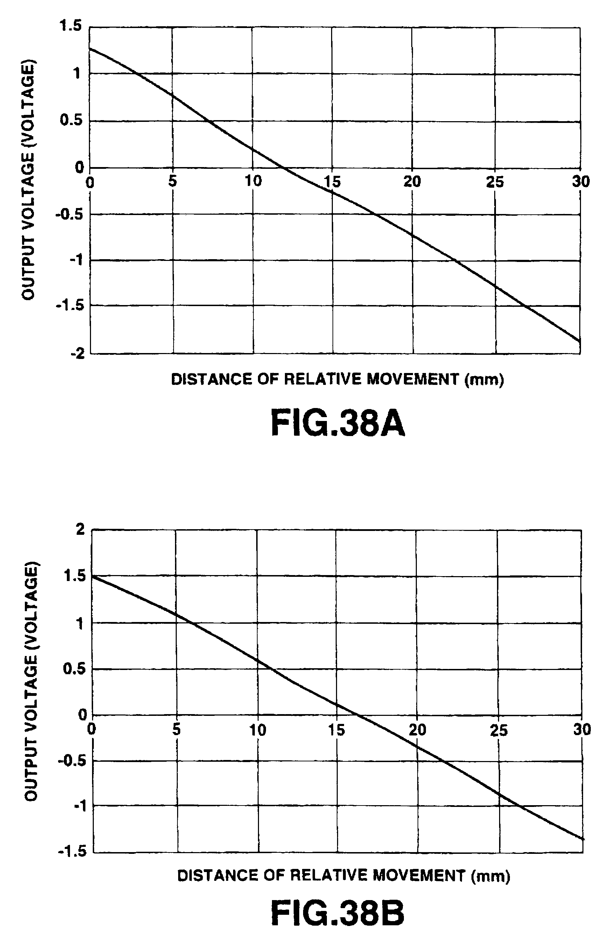

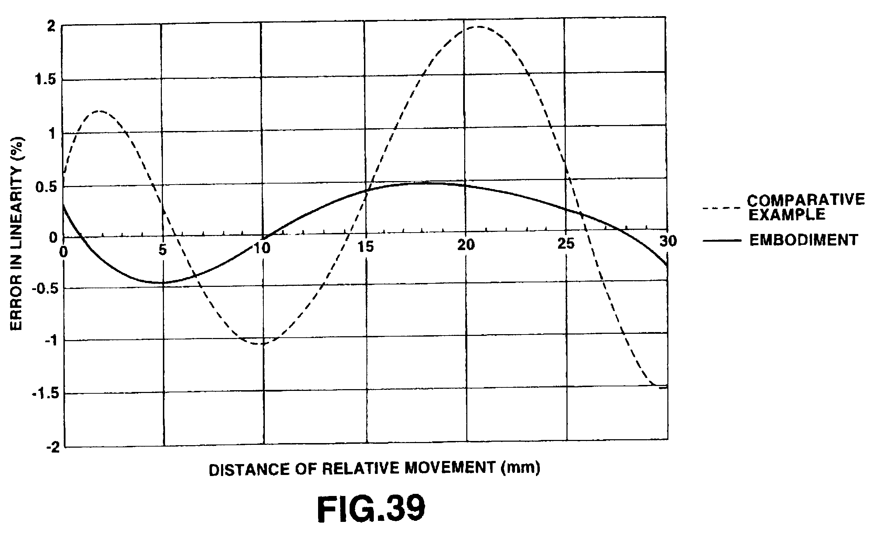

FIG. 38A shows the relationship between the relative movement distance and the output from the sensor in the comparative example having the structure as shown in FIG. 7. FIG. 38B shows the relationship between the relative movement distance and the output from the sensor realized in this embodiment. FIG. 39 shows a result of a comparison to which the errors in the linearity are subjected. As can be understood from FIG. 39, an error of the linearity by about 2 % is made in the comparative example. In this embodiment, the error of the linearity is limited to be smaller than 1 %. Therefore, the magnetic displacement detection apparatus 300 according to this embodiment is able to improve the linearity.

In the structure shown in FIG. 34, the magnetic sensor 302 is disposed such that the plane of the core including the closed magnetic circuit is made to be in parallel with the relative movement axis X. The structure is not limited to this. For example, the magnetic sensor 302 may be disposed such that the plane including the closed magnetic circuit is made to be perpendicular to the relative movement axis X.

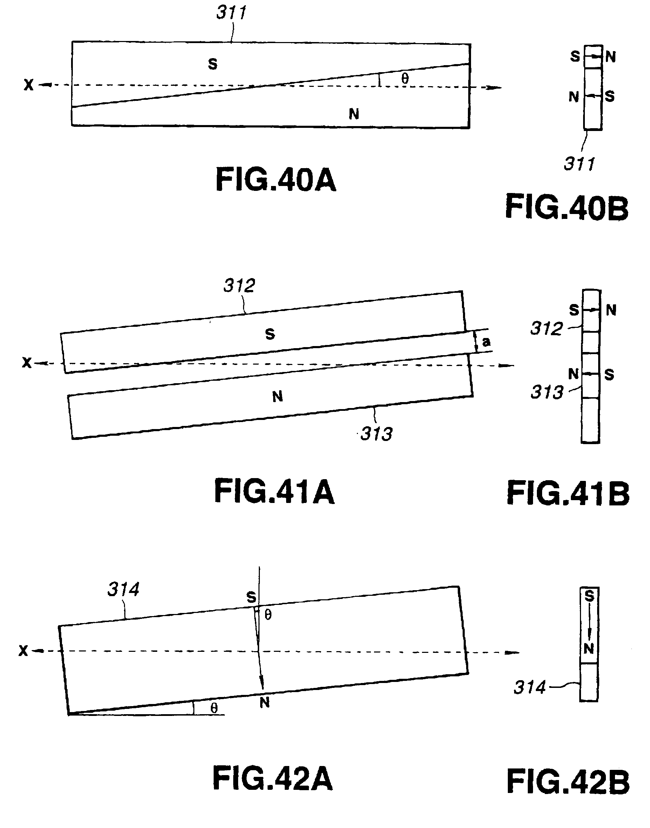

A modification of the structure of the magnet which is provided for the portion which must be detected will now be described with reference to FIGS. 40 to 43.

In the modification shown in FIGS. 40A and 40B, one magnet 311 having a length not shorter than the effective length L and formed into a thin plate-like shape is magnetized such that the right-half portion and the left-half portion of the surface of the magnet 311 with respect to the boundary line which is inclined from the lengthwise direction by the angle $\theta$ have opposite polarities. As a result, also the magnet 311 includes two magnetic poles positioned adjacent to each other and having the magnetic pole surfaces having opposite polarities, similarly to the magnet 301. The magnet 311 is joined to either of the two members (not shown) which are moved relatively such that the lengthwise direction of the magnet 311 is made to be in parallel with the relative movement axis X. Therefore, the length of the magnet 311 is not shorter than the effective length L on the relative movement axis X.

Also when the magnet 311 is employed, a magnetic field which is changed with remarkable linearity from either of the two magnetic poles of the magnet 311 to the other magnetic pole when the magnetic-field detection portion and the portion which must be detected are relatively moved can be detected by the magnetic sensor 302 over the effective length L. Therefore, an output signal having remarkable linearity over the effective length L can be obtained by the magnetic sensor 302.

In the modification shown in FIGS. 41A and 41B, two magnets 312 and 313 having a length longer than the effective length L and formed into an elongated shape are magnetized such that the polarities of their magnetic pole surfaces are opposite to each other. As a result, also the magnets 312 and 313 includes two magnetic poles positioned adjacent to each other and having the magnetic pole surfaces, the polarities of which are opposite to each other, similarly to the magnet 301. The magnets 312 and 313 are joined to either of the two members (not shown) which are relatively moved such that the lengthwise direction of the magnets 312 and 313 are inclined from the relative movement axis X by the angle θ. Moreover, the lengths of the magnets 312 and 313 on the relative movement axis X are not shorter than the effective length L and the magnets 312 and 313 are disposed apart from each other for a predetermined distance a (which is, for example, 2 mm).

Also in the case where the magnets 312 and 313 are employed, when the magnetic-field detection portion and the portion which must be detected are moved relatively, a magnetic field which is changed with remarkable linearity from either of the magnetic pole of the magnet 312 and that of the magnet 313 is detected by the magnetic sensor 302 over the effective length L. Therefore, an output signal having remarkable linearity over the effective length L can be obtained from the magnetic sensor 302.

When the magnetic poles of the individual magnets 312 and 313 are used, the boundary between the magnetic poles can be made to be cleared as compared with the structure of the magnet 301 shown in FIGS. 33A and 33B and the magnet 311 shown in FIGS. 40A and 40B in which one magnet is magnetized such that the polarities of the magnetic pole surfaces are opposite to each other. Therefore, the linearity of the output can furthermore be improved.

In the modification shown in FIGS. 41A and 41B, the magnet 312 and the magnet 313 are disposed apart from each other. The magnets may be disposed in contact with each other.

The modification shown in FIG. 42 has a structure that one magnet 314 having a length longer than the effective length L and formed into a thin plate-like shape is magnetized such that the right-half portion of the surface and the left-half surface of the magnet 314 have opposite polarities with respect to the central line in the widthwise direction. As a result, also the magnet 314, similarly to the magnet 1, includes two magnetic poles positioned adjacent to each other and having opposite polarities. The magnet 314 is joined to either of the two members (not shown) which are moved relatively such that lengthwise direction of the magnet 314 is inclined from the relative movement axis X with respect to the magnetic sensor 302 by angle θ. Moreover, the length of the magnet 314 on the relative movement axis X is not shorter than the effective length L.

Also in the case where the magnet 314 is employed, when the magnetic-field detection portion and the portion which must be detected are moved relatively, a magnetic field which is changed with remarkable linearity from either of the two magnetic poles of the magnet 314 to the other magnetic pole is detected by the magnetic sensor 302 over the effective length L. Therefore, an output signal having remarkable linearity can be obtained by the magnetic sensor 302 over the effective length L.

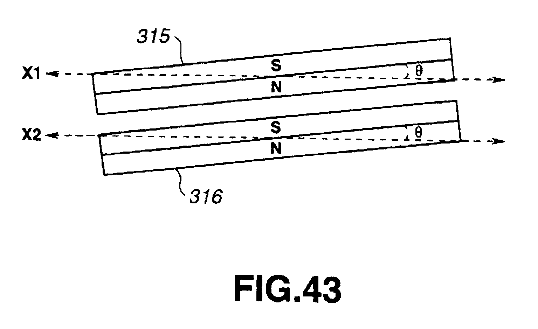

An applicable example of the magnetic displacement detection apparatus according to the present invention is shown in FIG. 43.

The applicable example has a structure that two sets are provided which incorporate the magnets 315 and 316 according to the foregoing embodiment and corresponding magnetic sensors (not shown) disposed in parallel with the relative movement axes X1 and X2 shown in FIG. 43 and placed on a plane perpendicular to the sheet on which the drawing is drawn. In a detection circuit portion (not shown), the difference between the output signals obtained from the magnetic sensors in the respective sets is detected. Although FIG. 43 shows the structure that the magnets 315 and 316 have the structure similar to that of the magnet 301 shown in FIGS. 33A and 33B, the structure shown in FIGS. 40 to 42 may, of course, be employed.

When the displacement detection apparatus is adapted to the subject, such as a machine tool, which must be detected, either of the magnets or the magnetic sensors must be joined to a position apart from the central axis of the rotation of the member which can be rotated due to small space or the like. In the foregoing case, if the member is rotated, the clearance between the magnet and the magnetic sensor is changed. Therefore, the outer surface from the magnetic sensor is undesirable changed, thus causing the detection accuracy to deteriorate.

Therefore, two sets of the magnets and the magnetic sensors are provided similar to the foregoing applicable example such that the elements are joined symmetrically with respect to the central axis of rotation. If an output made in a case in which no rotation is performed is employed as a reference for the differential output signal of the output signals from the respective magnetic sensors, deviation from the reference output takes place in a case where rotation is performed. If the deviation is used as an offset signal and thus a signal process is performed such that the offset is made to be the reference value, deterioration in the detection accuracy can be prevented.

Although the above-mentioned embodiments have the structure that the permanent magnet is employed as the magnetic-field generating means, for example, an electromagnet may be employed as the magnetic-field generating means. Although the above-mentioned embodiments have the structure that the material of the core of the magnetic sensor is Permalloy, the material of the core may be a material, such as amorphous, having a high magnetic permeability.

Although the above-mentioned embodiments have the structure that the two coils are provided for the magnetic sensor to detect the absolute amount of displacement in accordance with the output denoting the difference between the two coils, only one coil may be provided for the magnetic sensor to detect the absolute amount of displacement in accordance with an output from the one coil. As a matter of course, a circuit for obtaining the difference is not required for the detection circuit portion.

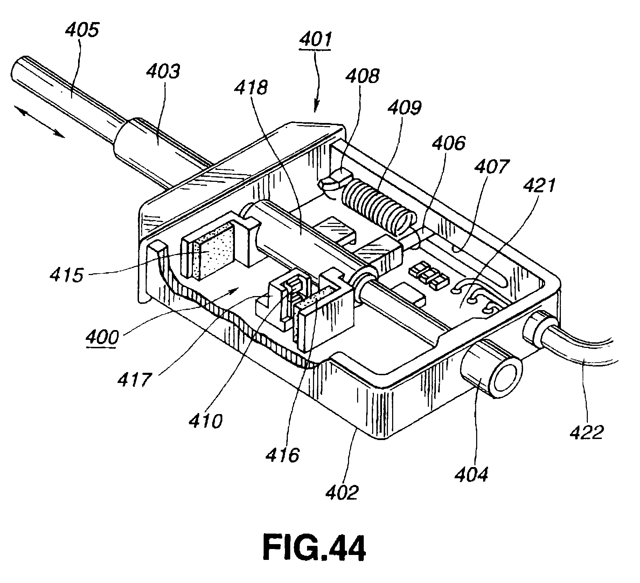

An embodiment formed by adapting the magnetic displacement detection apparatus according to the present invention to a gauge 401 is shown in FIGS. 44 to 47.

In this embodiment, a spindle shaft 405 is slidably inserted into bearing portions 403 and 404 provided for a case 402 of the gauge 401, as shown in FIG. 44.

A guide shaft 406 projecting into a direction perpendicular to the axial direction of the spindle shaft 405 is provided for the spindle shaft 405 at a position in the case 402. The leading end of the guide shaft 406 is inserted into an elongated guide hole 407 formed in the side portion of the case 402 to run parallel to the direction in which the spindle shaft 405 is slid. Therefore, the spindle shaft 405 is able to slide in the elongated guide hole 407 in a range in which the guide shaft 406 is moved.

Moreover, a spring 409 is arranged between the guide shaft 406 and a claw 408 projecting over the inner surface on the side of the case 402. The urging force of the spring 409 always urges the spindle shaft 405 in one direction, that is, in a direction in which the spindle shaft 405 projects over the bearing portion 403.

That is, the foregoing gauge 401 includes the magnetic displacement detection apparatus 400 disposed between the spindle shaft 405 and the case 402.

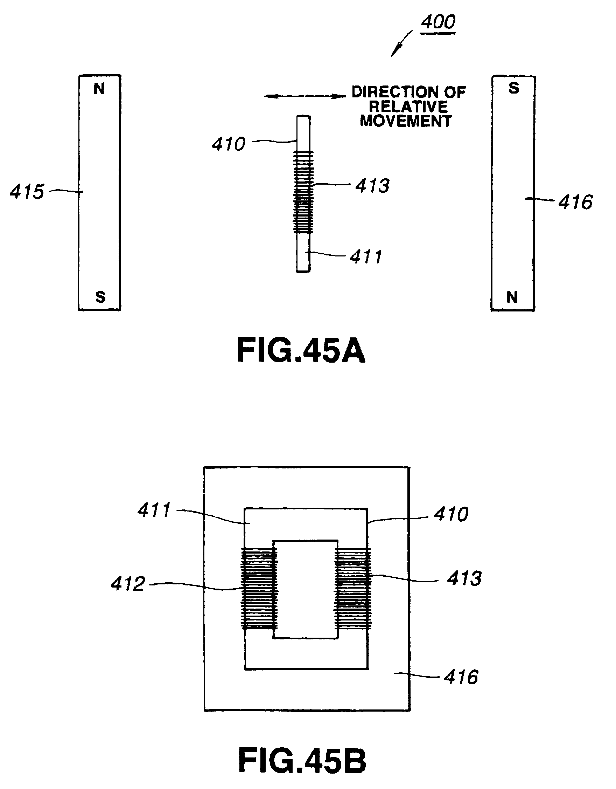

The magnetic displacement detection apparatus 400 incorporates a magnetic-field detection portion having the magnetic sensor 410 and a portion which must be detected and which has two permanent magnets 415 and 416 serving as the magnetic-field generating means. The detailed structure of the magnetic displacement detection apparatus 400 is shown in FIGS. 45A and 45B.

The magnetic sensor 410 of the magnetic-field detection portion is constituted by winding coils 412 and 413 around opposite positions of the core 411 which forms a closed magnetic circuit and which has a short ring shape.

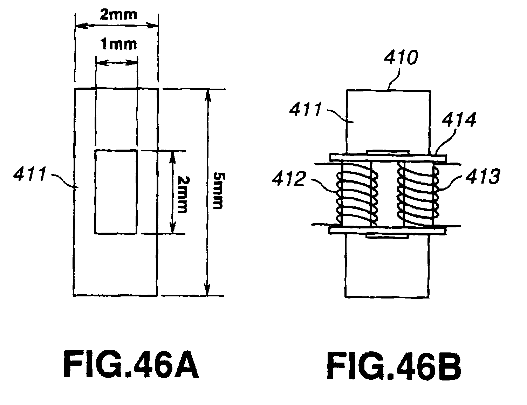

The core 411 is made of a material, for example, Permalloy, having high magnetic permeability. An example of the size the core 411 is, as shown in FIG. 46A, arranged such that the outer diameter is 5 mm long and 2 mm wide and the inner diameter is 2 mm long and 1 mm wide. The thickness of the core 411 is 50 μm. Each of the coils 412 and 413 is constituted by winding a conductive wire having a diameter of 0.06 mm 50 times. In actual, the coils 412 and 413 are wound around a core 411 through a bobbin 414, as shown in FIG. 46B.

The two permanent magnets 415 and 416 serving as the magnetic-field generating means are made of, for example, SmCo. The size of each of the permanent magnets 415 and 416 is 7 mm long, 5 mm wide and 1 mm thick. As shown in FIG. 45A, the two permanent magnets 415 and 416 are disposed apart from each other for a predetermined distance such that the directions of magnetization are opposite to each other. Moreover, the permanent magnets 415 and 416 are disposed along the direction in which the relative movement with respect to the magnetic sensor 410 is performed while the magnetic sensor 410 is interposed between the permanent magnets 415 and 416.

On the other hand, the magnetic sensor 410 is disposed between the two permanent magnets 415 and 416 such that the center of the ring core 411 is positioned on a straight line passing through the centers of the permanent magnets 415 and 416. Moreover, the plane including the ring shape is made to be perpendicular to the direction in which the relative movement is performed.

The gauge 401 has a structure as shown in FIG. 44 that the magnetic sensor 410 is secured to the bottom portion of a case 2 through a sensor holder 417. On the other hand, the permanent magnets 415 and 416 are, through a scale holder 418, secured to the spindle shaft 405. That is, the structure is formed such that when the spindle shaft 405 is slid with respect to the case 402 in a direction in which the spindle shaft 405 is inserted/discharged, the permanent magnets 415 and 416 are, together with the spindle shaft 405, moved with respect to the magnetic sensor 410.

In the case 402 of the gauge 401, a circuit substrate 421 is joined which incorporates an oscillation circuit for exciting and operating the coil of the magnetic sensor 410 and a detection circuit for obtaining an output signal from the magnetic sensor 410. The circuit substrate 421 and the magnetic sensor 410 are electrically connected to each other. Moreover, a cable 422 is discharged from the circuit substrate 421 to the outside of the case 402.

The oscillation circuit portion 107 and the detection circuit portion 108 shown in FIG. 10 are disposed on the circuit substrate 421.

An output from the detection circuit portion 108 is supplied to a control unit (not shown). In the control unit adapted to a known method, the absolute amount of displacement between the magnetic sensor 410 of the magnetic-field detection portion and the permanent magnets 415 and 416 of the portion which must be detected is detected.

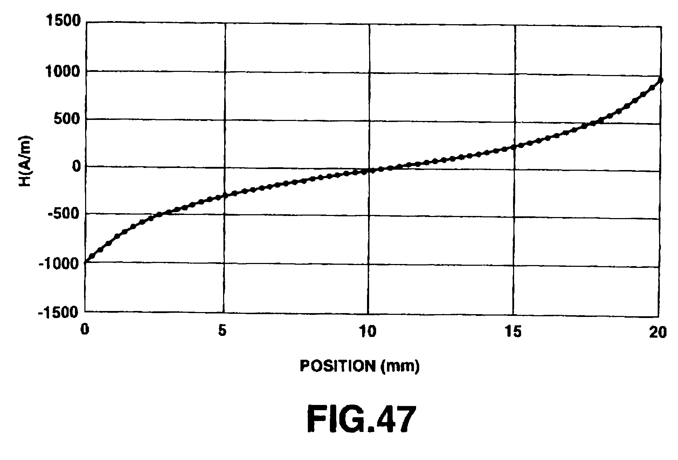

FIG. 47 shows a displacement-magnetic field characteristic obtained by measuring the intensity of the magnetic field which is applied to the magnetic sensor 410 between the two permanent magnets 415 and 416 of the magnetic displacement detection apparatus 400, the intensity being measured at each displacement position.

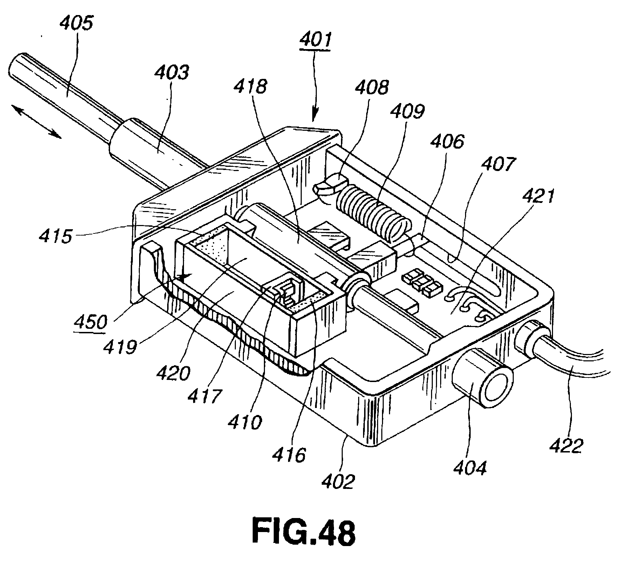

Another embodiment in which the magnetic displacement detection apparatus according to the present invention is applied to a gauge 401 is shown in FIGS. 48 to 50.

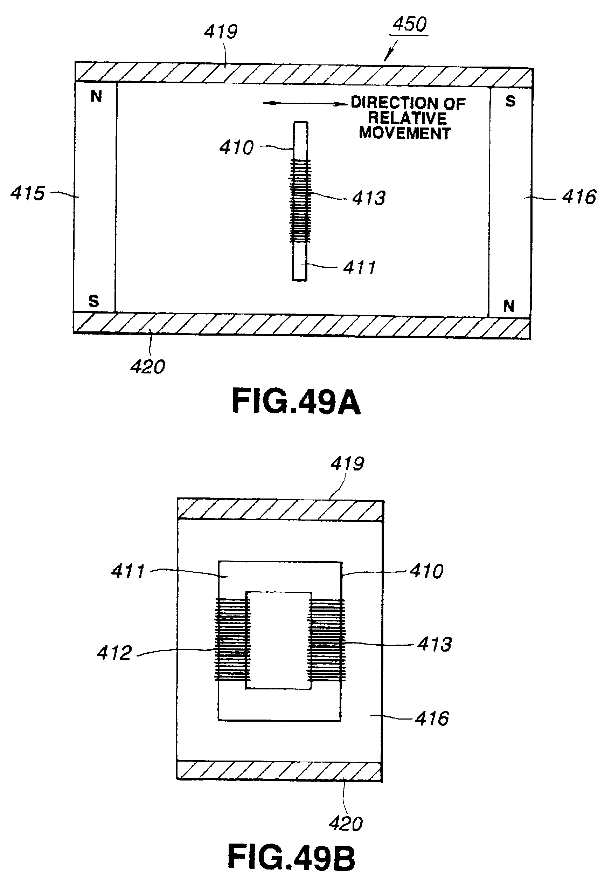

A magnetic displacement detection apparatus 450 according to this embodiment has a structure formed by improving the embodiment shown in FIGS. 44 to 47. In this embodiment, the two permanent magnets 415 and 416 according to the above-mentioned embodiment are connected to each other by two opposite connection plates 419 and 420 each of which is made of a material having a high magnetic permeability, as shown in FIGS. 49A and 49B.

The material having the high magnetic permeability and employed to form the connection plates 419 and 420 is, for example, Permalloy. The size of each of the connection plates 419 and 420 is, for example, 5 mm long, 30 mm wide and 0.1 mm thick. In this embodiment, the two connection plates 419 and 420 are secured and bridged between the two permanent magnets 415 and 416 in a state in which the magnetic sensor 410 is interposed, the connection plates 419 and 420 being disposed in the direction in which the permanent magnets 415 and 416 are moved relatively.

Since the structures of the other elements may be the same as those according to the above-mentioned embodiments, the same elements are given the same reference numerals and the same elements are omitted from description.

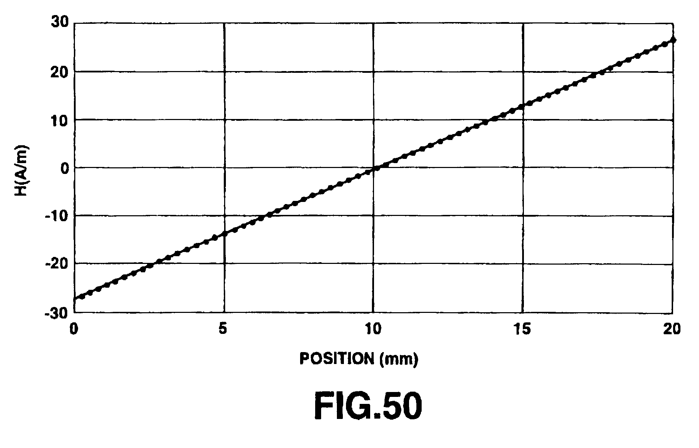

The magnetic displacement detection apparatus 450 according to this embodiment has the structure that the two permanent magnets 415 and 416 are connected to each other by the connection plates 419 and 420 made of the material having the high magnetic permeability. Therefore, the linearity of the displacement-magnetic field characteristic can significantly be improved as shown in FIG. 50.

That is, FIG. 50 shows results of measurement of the intensities of magnetic fields applied to the magnetic sensor 410 at the position between the two permanent magnets 415 and 416 at the displacement positions. As can be understood from the foregoing characteristic graph, the intensity of the magnetic field is weakened as compared with the embodiment shown in FIG. 44 which is not modified. However, the linear region of the magnetic field can be enlarged, that is, substantially complete linearity can be maintained. Therefore, the absolute amount of displacement between the magnetic sensor 410 and the permanent magnets 415 and 416 can furthermore accurately be detected. As a result, a great effect can be obtained in that the performance of the magnetic displacement detection apparatus can be improved.

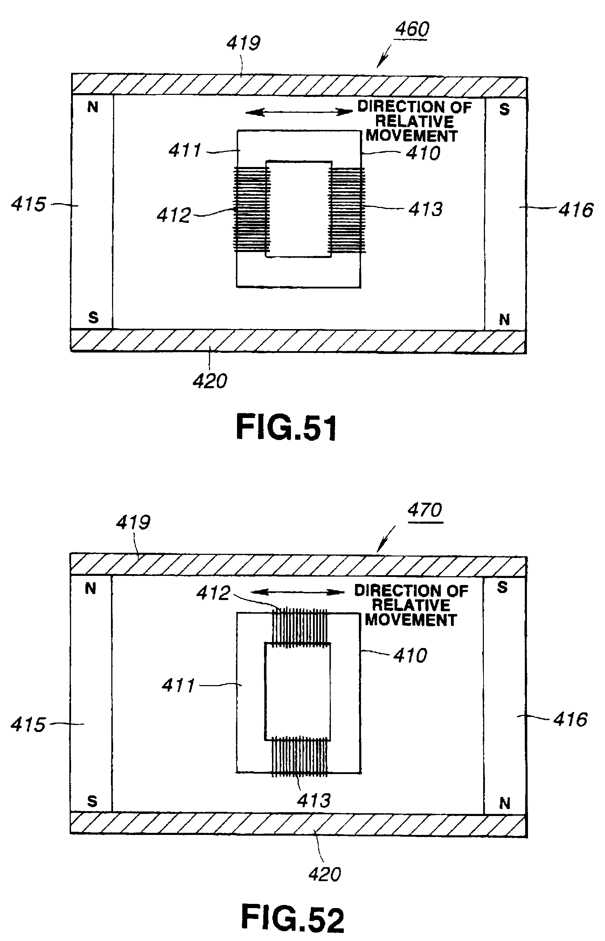

Although the magnetic sensor 410 of the magnetic-field detection portion is joined such that the plane of the core 411 is perpendicular to the direction in which the relative movement is performed, the structure of the magnetic displacement detection apparatus 460 shown in FIG. 51 may be employed in which the plane of the core 411 is in parallel with the direction in which the relative movement is performed.

The positions of the coils 412 and 413 which are wound around the core 411 may be changed similar to those of the magnetic displacement detection apparatus 470 shown in FIG. 52.

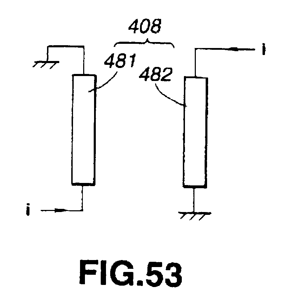

The above-mentioned embodiments have the structure that the coil type magnetic sensor which is operated in response to high-frequency pulses and which has the impedance which is changed with respect to the external magnetic field is employed as the magnetic sensor of the magnetic detection portion of the magnetic displacement detection apparatus according to the present invention. The magnetic of the magnetic-field detection portion may be an impedance-variation-type magnetic sensor having two magneto-sensitive portions each having the impedance which is changed with respect to the external magnetic field. For example, a so-called magnetic impedance effect (MI) device as suggested in Japanese Patent Laid-Open No. 6-281712 may be employed. The MI device is made of amorphous alloy composed of Fe, Si, Co, B and so forth. The MI device has a wire-like shape, as shown in FIG 53. When a high-frequency electric current is supplied to the MI in the lengthwise direction thereof, the impedance of the MI device is changed with respect to an external magnetic field made incident in the lengthwise direction.

A magnetic sensor 480 comprising the MI device, as shown in FIG. 53, comprises two devices 481 and 482 so as to obtain the difference between the two outputs. The magnetic sensor 480 comprising the MI device incorporates the oscillation circuit and the detection circuit portion shown in FIGS. 10 and 36 so as to be operated and enabled to detect a signal.

Since the magnetic sensor 480 comprising the MI device enables the cost to be reduced and a satisfactory characteristic to be realized, the detection accuracy of the magnetic displacement detection apparatus can be improved and the cost of the same can be reduced.

A carburetor to which the present invention is applied will now be described.

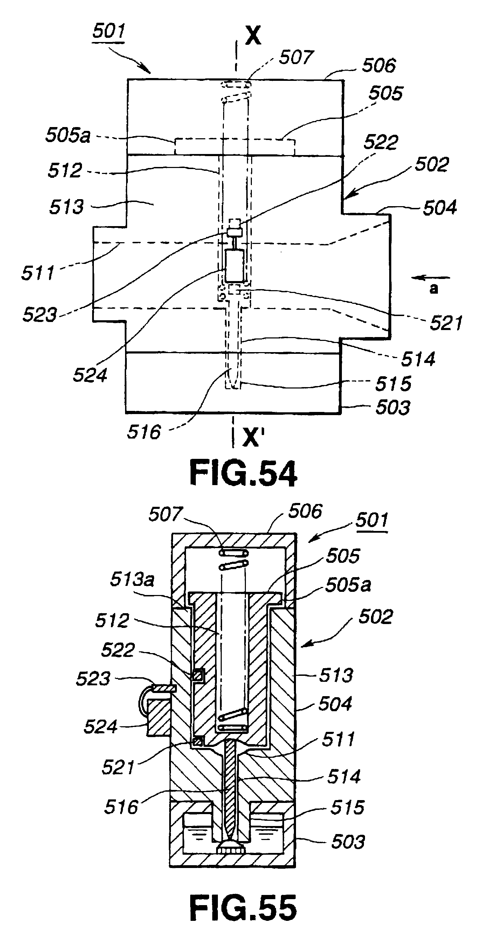

FIG. 54 is a side view showing the carburetor to which the present invention is applied. FIG. 55 is a cross sectional view of the carburetor taken along line X-X' shown in FIG. 54.

A carburetor 501 incorporates a so-called direct acting valve and comprising a main body 502 and a chamber 503 which is connected to a fuel introducing passage 514 of the main body 502 and into which liquid fuel is introduced.

The main body 502 incorporate a carburetor body 504; a direct acting piston valve 505 which is inserted into a valve chamber 512 formed in the carburetor body 504 and arranged to open/close a venturi passage 511 formed in the carburetor body 504; a cover 506 mounted on an upper opening of the carburetor body 504 so as to close the valve chamber 512; and a spring 507 disposed between the cover 506 and the carburetor body 504 and arranged to urge the piston valve 505.

The carburetor body 504 is made of, for example, zinc die-cast and structured to include a venturi passage 511 in which sucked air flows in a direction indicated by an arrow a shown in FIG. 54. The carburetor body 504 has a cylinder portion 515 which forms a valve chamber 512 which upwards and vertically extend from the venturi passage 511, which is opened in the venturi passage 511 and which is arranged to receive the piston valve 505. The carburetor body 504 has a fuel introducing passage 514 downwards and vertically extending from the venturi passage 511 such that the fuel introducing passage 514 is formed coaxially with the cylinder portion 513. Moreover, a jet needle 516 which is provided for the piston valve 505 and a jet needle 516 to be described later is inserted into the fuel introducing passage 514. In addition, the carburetor body 504 has a fuel introducing portion 515 formed integrally with the fuel introducing passage 514 and extending into the chamber 503.

The piston valve 505 having a cylindrical shape having a bottom is inserted into the valve chamber 512 formed in the cylinder portion 515, the piston valve 505 being inserted perpendicular to a direction in which sucked air which flows in the venturi passage 511 flows. The piston valve 505 is made to be slidable with respect to the cylinder portion 513. Moreover, the piston valve 505 is held in the cylinder portion 513 in such a manner that the axis of vertical movement is not deviated. The piston valve 505 is vertically moved in the valve chamber 512 so that the area of the venturi passage 511 is changed. Thus, the amount of sucked air which flows in the venturi passage 511 is adjusted.

A cylindrical cover 506 having a bottom and a shape corresponding to the cylinder portion 513 is mounted on an upper opening of the cylinder portion 513 so that the valve chamber 512 formed in the cylinder portion 513 is closed. A spring 507 is disposed between the cover 506 and the piston valve 505. The spring 507 urges the piston valve 505 in a direction in which the venturi passage 511 is closed.

An engagement portion 513a for limiting the movement of the piston valve 505 in the closing direction is formed in the upper opening of the cylinder portion 513. A flange portion 505a corresponding to the engagement portion 513a is formed in the upper opening of the piston valve 505. When the piston valve 505 is urged by the spring 507 in the direction in which the venturi passage 511 is closed, the flange portion 505a and the engagement portion 513a are engaged to each other. When the force for opening the venturi passage 511 is added to the piston valve 505, the piston valve 505 is maintained at a position at which the venturi passage 511 is closed maximally. Note that the opening of the piston valve 505 at the foregoing position is called an "idling opening".

A jet needle 516 is provided on the outside of the bottom surface of the piston valve 505. The jet needle 516 is inserted into the fuel introducing passage 514 formed downwards below the venturi passage 511. When the piston valve 505 is moved, the jet needle 516 is vertically moved. The jet needle 516 adjust the amount of fuel which is sucked from the chamber 503 into the venturi passage 511.

When the carburetor 501 having the above-mentioned structure is applied to, for example, a motorcycle, an end of a throttle cable (not shown) is connected to the bottom portion of the piston valve 505. Another end of the throttle cable is connected to an accelerator grip. When the accelerator grip is operated, the piston valve 505 is vertically moved. Thus, the passage area of the venturi passage 511 is changed between a fully-closed state and a fully-opened state. Moreover, the amount of fuel which is sucked into the venturi passage 511 is adjusted. Thus, in the carburetor 501, fuel can be mixed with sucked air so as to be supplied to the engine. Thus, the rotational speed of the engine can be varied.

Even if the piston valve 505 of the carburetor 501 is brought to the state of the idling opening, the venturi passage 11 is not completely closed. Therefore, fuel in a predetermined quantity is sucked from the chamber 503 into the venturi passage 511. Therefore, the carburetor 501 is able to supply, to the engine, sucked air with which fuel in a predetermined quantity is mixed even if the piston valve 505 is in the state of the idle opening.

The carburetor 501 having the above-mentioned structure is provided with an opening detection portion opening detection portion for detecting the opening of the piston valve 505.

The opening detection portion incorporates a first magnet 521 embedded in the lower end of the piston valve 505; a second magnet 522 embedded at a position apart from the first magnet 521 for a distance not shorter than a distance for which the piston valve 5 is able to move; a magnetic sensor 523 provided for the outer surface of the insulating wall of the cylinder portion 513; and a detection circuit 524 for obtaining a detection signal supplied from the magnetic sensor 523 so as to electrically process the signal.

The distance from a position of the piston valve 505 at the idling opening and the position of the piston valve 505 at the opening with which the venturi passage 511 is opened maximally, that is, the distance for which the piston valve 505 is vertically moved is called a "maximum opening length L".

Each of the first and second magnets 521 and 522 is a permanent magnet made of , for example, barium ferrite and having a surface magnetic flux density of about 1000 G. The material of the first and second magnets 521 and 522 is not limited to the barium ferrite. For example, the first and second magnets 521 and 522 may be a permanent made of sintered SmCo, plastic or rubber. An electromagnet may be employed. If the electromagnet is employed, dispersion in the magnetic fields which takes place with the permanent magnet can be prevented.

The first magnet 521 is disposed at the lower end of the piston valve 505 in a direction perpendicular to a direction a in which the sucked air flows in the venturi passage 511. When the piston valve 505 is moved, the first magnet 521 is moved in parallel with the central axis of the piston valve 505. The second magnet 522 is disposed at the end of the piston valve 505 above the first magnet 521 apart from the same for a distance not shorter than the maximum opening length L. When the piston valve 505 is moved, also the second magnet 522 is moved in parallel with the central axis of the piston valve 505 similarly to the first magnet 521.

That is, the first magnet 521 and the second magnet 522 are disposed such that their loci are in parallel with the central axis of the piston valve 505. Moreover, their extensions are superimposed. A straight line connecting the first magnet 521 and the second magnet 522 to each other is made to be perpendicular to the direction a in which sucked air flows.

The first magnet 521 and the second magnet 522 are disposed to vertically generate magnetic fields perpendicularly to the direction in which the piston valve 505 is moved. The first and second magnets 521 and 522 are magnetized to generate magnetic fields in opposite directions with respect to the magnetic sensor 523.

Since the first magnet 521 and the second magnet 522 are disposed as described above, a closed magnetic circuit is spatially formed between the first magnet 521 and the second magnet 522. Therefore, the magnetic field formed in a predetermined direction is linearly changed on a straight line which is in parallel with a straight line which connects the first magnet 521 and the second magnet 522 to each other, that is, on a straight line which is in parallel with the axis of movement of the piston valve 505.

The magnetic sensor 523 detects the intensity of the magnetic field in a predetermined direction which is applied to the first magnet 521 and the second magnet 522 so as to convert the detected intensity of the magnetic field into an electric signal. The magnetic sensor 523 is made of, for example, a magnetic resistance (MR) device, a Hall device or the like. The magnetic sensor 523 is disposed on the outside of the cylinder portion 513 to be opposite to the first magnet 521 and the second magnet 522 through the insulating wall. Moreover, the position at which the magnetic sensor 523 is disposed is a position on a straight line which connects a straight line which connects the first magnet 521 and the second magnet 522 to each other and the central axis of the piston valve 505 to each other. Moreover, the magnetic sensor 523 is positioned lower than the position of the second magnet 522 when the piston valve 505 has been brought to the idling opening. When the piston valve 505 has been brought to a position at which the venturi passage 511 is opened maximally, the magnetic sensor 523 is positioned higher than the position of the first magnet 521.

When the opening of the piston valve 505 is changed, the magnetic sensor 523 detects the intensity of the magnetic fields from the first magnet 521 and the second magnet 522 so as to supply a signal corresponding to the intensity of the magnetic field to the detection circuit 524.

The detection circuit 524 incorporates a circuit for operating the magnetic sensor 523 and a circuit for detecting the signal transmitted from the magnetic sensor 523. The detection circuit 524 supplies the signal detected by the magnetic sensor 523 to, for example, a control circuit for controlling the ignition timing of the engine.

The foregoing opening detection portion has the structure that the magnetic sensor 523 detects the magnetic field applied from the first magnet 521 and the second magnet 522 provided for the piston valve 505. Thus, the opening of the piston valve 505 can be detected Since the intensity of the magnetic field in a predetermined direction is changed linearly on a straight line which is in parallel with a straight line which connects the first magnet 521 and the second magnet 522 to each other, the magnetic sensor 523 disposed on the foregoing straight line is able to linearly detect the opening of the piston valve 505.

Examples of the magnetic sensor 523 and so forth provided for the carburetor 501 will specifically be described.

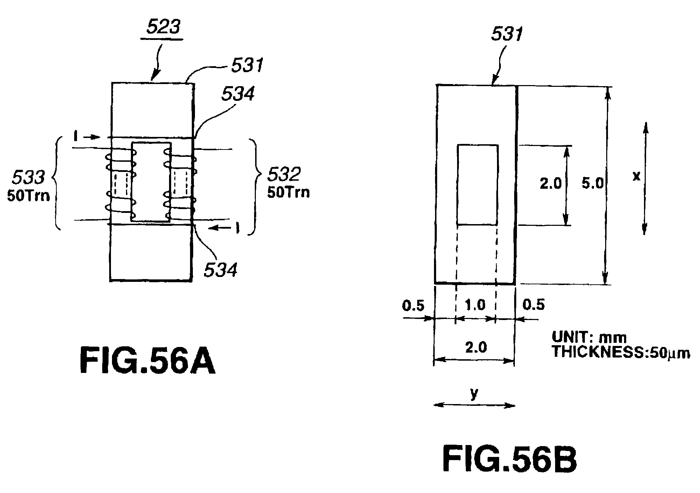

As shown in FIG. 56A, the magnetic sensor 523 incorporates, for example, a rectangular ring core 531 forming a closed magnetic circuit; coils 532 and 533 wound around two sides of the core 531 in the lengthwise direction; and a bobbin 534 serving as a guide for the coils 532 and 533. The core 531 has a rectangular ring shape having an outer size of 5.0 mm × 2.0 mm, an inner size of 2.0 mm × 1.0 mm and a thickness of 50 μm. The core 531 is made of, for example, Permalloy such that etching is performed so that the foregoing shape is formed. Then, heat treatment is performed so that the core 531 is manufactured. The magnetic sensor 523 is manufactured by mounting the nylon bobbin 534 on the core 531. Then, a Cu-wire having a diameter of 0.06 mm is wound around two lengthwise-directional sides running parallel to each other, winding being performed 50 times on the right and left sides. Moreover, a 2 mm × 5 mm × 12 mm aluminum case is fitted to the magnetic sensor 523 to protect the magnetic sensor 523 and to determine the direction, and then epoxy resin is injected. A high-frequency pulse electric current I is allowed to pass through the coils 532 and 533 wound around the core 531 to generate magnetic fields in opposite directions.

The magnetic sensor 523 has excellent sensitivity to an external magnetic field which is made incident in the lengthwise direction (in a direction x shown in FIG. 56B) of the core 531 with a pulse electric current having a high frequency. Moreover, the impedance is greatly changed with respect to the external magnetic field. Since the magnetic sensor 523 has the structure that the core 531 is formed into the ring shape and the two coils are wound, noise can electrically be canceled by obtaining the difference in the output.

Moreover, the magnetic sensor 523 having the oscillation circuit portion and the detection circuit 524 comprising the detection circuit portion structured as shown in FIGS. 10 and 36 enables an output having a great dynamic range to be obtained.

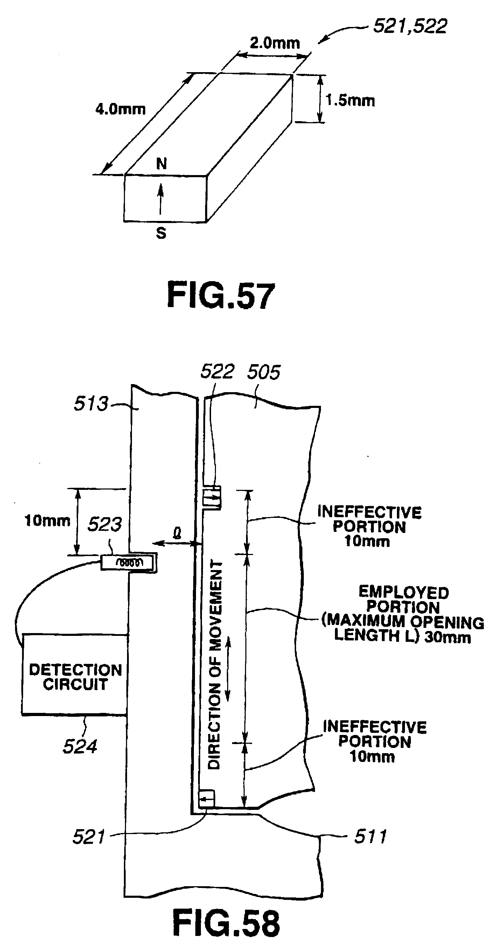

On the other hand, each of the first and second magnets 521 and 522 is, as shown in FIG. 57, formed into a 2.0 mm × 4.0 mm × 1.5 mm rectangular parallelopiped magnetized in a direction indicated by an arrow shown in FIG. 57.

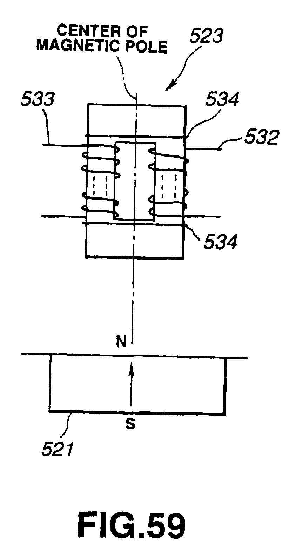

The magnetic sensor 523 and the first and second magnets 521 and 522 are disposed on the carburetor 501, as shown in FIGS. 58 and 59.

Assuming that the maximum opening length L of the piston valve 505 is 30 mm, the first magnet 521 and the second magnet 522 are disposed on the side surface of the piston valve 505 such that the distance (distance D between magnetic poles) between the first and second magnets 521 and 522 is 50 mm, as shown in FIG 58. At this time, the direction of magnetization is made to be in parallel with the magnetism sensing direction of the magnetic sensor 523 and the magnetizing directions are opposite to each other. Note that the first magnet 521 and the second magnet 522 are inserted from the side surface of the piston valve 505, followed by bonding with resin or the like.

The magnetic sensor 523 is disposed opposite to the outer surface of the cylinder portion 513 of the carburetor body 504 with respect to a straight line which connects the first magnet 521 and the second magnet 522 to each other. When the piston valve 505 is in the idling opening state, the magnetic sensor 523 is disposed below the position of the second magnet 522 for a distance of 10 mm. To make the clearance 1 between the first magnet 521 and the second magnet 522 to be, for example, 10 mm, the magnetic sensor 523 is received in a groove having a lateral width of 2.2 mm, a vertical width of 5.2 mm and a depth of 5 mm and formed in the outer surface of the cylinder portion 513.

To maximally improve the sensitivity of the magnetic sensor 523 to the first and second magnets 521 and 522, the magnetic sensor 523 is, as shown in FIG. 59, disposed such that the direction in which the magnetic field is generated by the coils 532 and 533 and the direction in which the first and second magnets 521 and 522 are magnetized are made to be in parallel with each other. To cause the magnetic fluxes in the same quantity to be introduced into the two coils 532 and 533, the magnetic sensor 523 is disposed such that the widthwise direction (direction y shown in FIG. 56B) of the magnetic sensor 523 is made to be perpendicular to the direction in which the valve is moved.

Since the magnetic sensor 523 and the first and second magnets 521 and 522 are provided for the carburetor 501 as described above, the magnetic sensor 523 does not detect the portion of 10 mm from the two magnets because the foregoing is an ineffective portion if the piston valve 505 is vertically moved in the range of the maximum opening length L. The magnetic sensor 523 detects the magnetic field in the central portion of 30 mm.

The clearance 1 from the magnetic sensor 523 to the first and second magnets 521 and 522 is determined in accordance with the structure of the carburetor 501 to which the foregoing elements are joined, the structure of the piston valve 505 and the relationship among the positions of the foregoing elements. Therefore, the distance D between the magnetic poles is determined in accordance with the clearance 1, the sensitivity of the magnetic sensor 523 and the intensity of the magnetic field of the first and second magnets 521 and 522. When the distance D between the magnetic poles is made to be maximum opening length L or longer in consideration of the ineffective portion of the magnetic field adjacent to the magnets, satisfactory sensitivity can be realized.

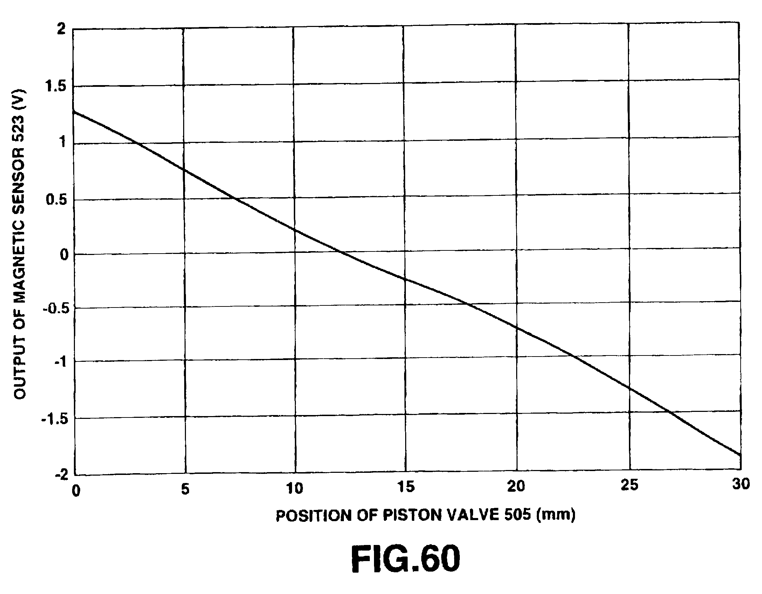

FIG. 60 is a graph showing the output characteristic of the magnetic sensor 523 realized when the piston valve 505 has been moved in the range of the maximum opening length L. The output of the magnetic sensor 523 is linearly enlarged/reduced as shown in the foregoing graph when the piston valve 505 has been moved. Therefore, when an output signal from the magnetic sensor 523 is detected, the opening of the piston valve 505 of the carburetor 501 can linearly be detected.

Although the carburetor 501 according to this embodiment incorporates the coil type magnetic sensor 523 which is operated in response to high-frequency pulses and which has the impedance which is changed with respect to an external magnetic field, the magnetic sensor may be, for example, a magnetic impedance effect (MI) device.

The MI device is made of amorphous alloy composed of Fe, Si, Co, B or the like. As shown in FIG. 53, the MI device is formed into a wire-like shape. When a high-frequency electric power is supplied in the lengthwise direction of the MI device, the impedance is changed with respect to an external magnetic field which is made incident in the lengthwise direction.

The magnetic sensor incorporating the MI device comprise the oscillation circuit portion and the detection circuit 524 having the detection circuit portion shown in FIGS. 10 and 36 so as to be operated and capable of detecting a signal.

Since the magnetic sensor 523 having the MI device enables the cost to be reduced and enables an excellent characteristic to be obtained, the opening of the piston valve 505 can accurately be detected and the cost reduction is permitted.

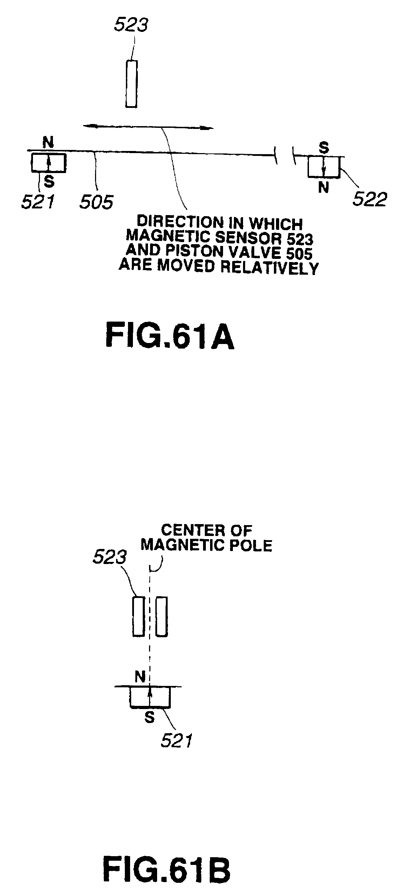

The positions when the magnetic displacement detection apparatus according to the present invention and incorporating the magnetic sensor 523 having the MI device is applied to the carburetor 501 are shown in FIGS. 61A and 61B.

As described above, the carburetor 501 to which the present invention is applied has the structure that the magnetic field applied from the first magnet 521 and the second magnet 522 is detected by the magnetic sensor 523. Therefore, the opening of the piston valve 505 can linearly and accurately be detected over the overall region in which the piston valve 505 is moved. Therefore, the carburetor 501 is able to accurately control the ignition timing of the engine. Moreover, the output of the engine and the fuel consumption can be improved. Since the opening of the piston valve 505 is linearity detected in the carburetor 501, a mechanism for adjusting the position of the magnetic sensor 523 and fine adjustment in the manufacturing process are not required. Moreover, the sizes of the magnetic sensor 523 and the detection circuit 524 can be reduced. Another embodiment of the carburetor to which the

present invention is applied will now be described.

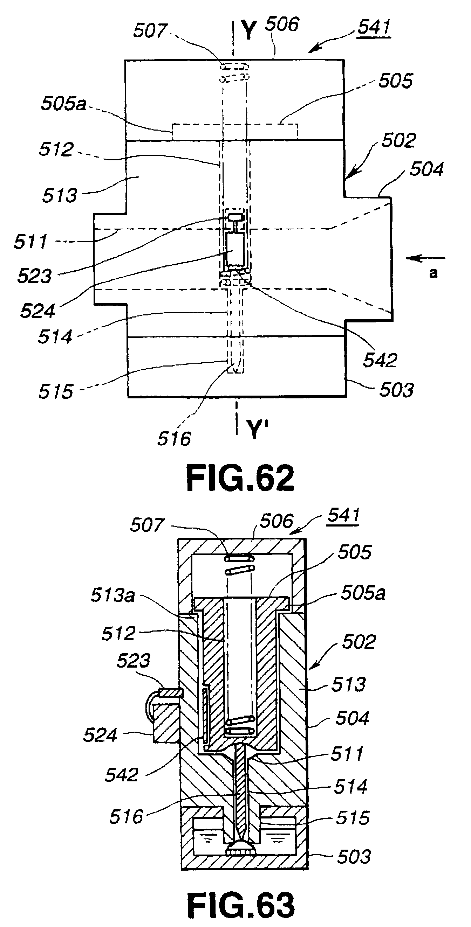

FIG. 62 is a side view showing the carburetor to which the present invention is applied. FIG. 63 is a cross sectional view of the carburetor taken along line Y-Y' shown in FIG. 62.

Note that the same elements in the following description about the carburetor according to this embodiment as those of the carburetor 501 are given the same reference numerals and the same elements are omitted from description.

That is, the carburetor 541 according to this embodiment, as shown in FIGS. 62 and 63, a magnet 542 is disposed on the side surface of the piston valve 505 in place of the first magnet 521 and the second magnet 522.

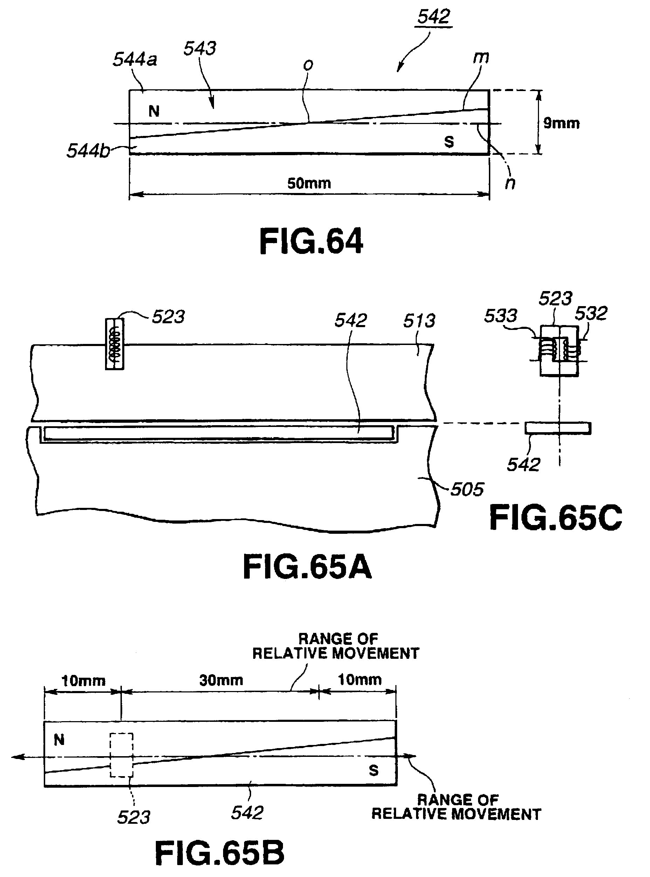

As shown in FIG. 64, the magnet 542 is in the form of a plate-like shape made of ferrite rubber and having a 50 mm $\times$ 9 mm main surface 543. The magnet 542 is magnetized perpendicularly to the main surface 543 so that magnetized surfaces 544a and 544b are formed. The boundary between the magnetized surface 544a and the magnetized surface 544b is a straight line so that a boundary line m is formed. The boundary line m intersects a lengthwise-directional center line n (hereinafter simply called a "center line n") of the main surface 543 at center o of the main surface 543. The angle $\theta$ of intersection is, for example, 2.

As shown in FIGS. 65A and 65C, the magnet 542 is disposed on the carburetor 541.

That is, the magnet 542 is, as shown in FIG. 65A, disposed on the side surface of the piston valve 505 such that the center line n is in parallel with the central axis of the piston valve 505. Assuming that the maximum opening length L of the piston valve 505 is 30 mm, the magnet 542 is disposed such that the upper end of the magnet 542 is positioned at a position of 10 mm above the magnetic sensor 523 in a state in which the piston valve 505 is in the idling opening state. Since the magnet 542 is disposed as described above, the magnetic sensor 523 does not detect the magnetic field in each of portions of 10 mm in the vertical direction as ineffective portions when the piston valve 505 has been vertically moved in the range of the maximum opening length L. The magnetic sensor 523 detects the magnetic field in the central portion of 30 mm.

When the piston valve 505 has been moved vertically, the magnet 542 is disposed such that the relative position of the magnetic sensor 523 is positioned on the center line n of the main surface 543, as shown in FIG. 65B. Since the magnet 542 is disposed as described above, the magnetic sensor 523 is moved on the center line of the main surface 543 of the magnet 542 when the piston valve 505 has been moved vertically.

To maximally improve the sensitivity of the magnetic sensor 523, the magnet 542 is disposed such that the direction in which the magnetic field is generated by the coils 532 and 533 and the direction in which the magnet 542 is magnetized are in parallel with each other, as shown in FIG. 65C.

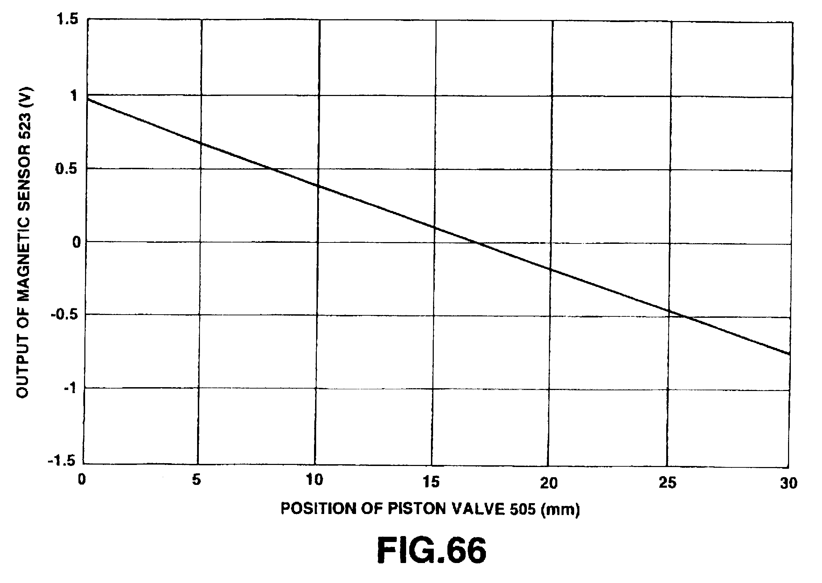

FIG. 66 is a graph showing the output characteristic of the magnetic sensor 523 realized when the piston valve 505 of the carburetor 541 has been moved in the range of the maximum opening length L. As shown in the characteristic graph, the output of the magnetic sensor 523 is linearity enlarged/reduced when the piston valve 505 is moved. Therefore, the carburetor 541 is able to detect the output of the magnetic sensor 523 as a signal indicating the opening of the piston valve 505.

Since the carburetor 541 incorporates the foregoing magnet 542, the opening of the piston valve 505 can furthermore accurately be detected.

That is, when two magnetized surfaces having different polarities are allowed to approach, the magnetic fields generated by the two magnetized surfaces affect each other. Thus, change in the magnetic field in the central portion of the two magnetized surfaces becomes steep. Since the magnet 542 is used, the portion in which the change in the magnetic field is made to be steep can be used. Therefore, the opening of the piston valve 505 can furthermore accurately be detected.

As described above, the carburetor 541 is structured such that the magnetic field applied from the magnet 542 is detected by the magnetic sensor 523. Therefore, the opening of the piston valve 505 can continuously (preferably linearly) and accurately be detected over the overall region in which the piston valve 505 is moved. Therefore, the ignition timing of the engine can accurately be controlled. Moreover, the output of the engine and the fuel consumption can be improved.

Since the carburetor 541 has the structure that the opening of the piston valve 505 is linearly detected, a mechanism for adjusting the position of the magnetic sensor 523 and fine adjustment in the manufacturing process are not required. Moreover, the sizes of the magnetic sensor 523 and the detection circuit 524 can be reduced.

Although the above-mentioned embodiment has the structure that the piston valve 505 is moved vertically, the present invention is not limited to the vertical direction. For example, the valve may be moved laterally.

The intersection angle θ between the boundary line m between the two magnetized surfaces 544a and 544b of the magnet 542 and the central line n is not limited particularly. The foregoing angle is changed in accordance with the maximum opening length L, the clearance l of the magnetic sensor 523 and the shape of the magnetic sensor 523. The intersection angle θ is, for example, $0° < θ < 10°$.

Although the invention has been described in its preferred form with a certain degree of particularity, it is understood that the present disclosure of the preferred form can be changed in the details of construction and in the combination and arrangement of parts without departing from the spirit and the scope of the invention.

**Claims**

1. A magnetic displacement detection apparatus comprising:

   a magnetic-field detection portion incorporating an impedance-change magnetic sensor having two magnetization sensing portions each of which is made of a material having impedance which is changed in accordance with the intensity of an external magnetic field;

   a portion which must be detected and which has magnetic-field generating means for generating a magnetic field which is continuously changed in a direction in which relative movement with respect to said magnetic-field detection portion is performed;

   an oscillation circuit portion for exciting and operating said magnetic sensor; and

   a detection circuit portion for obtaining an output signal formed by converting change in the impedance of the magnetic sensor occurring in accordance with the intensity of the external magnetic field applied from said magnetic-field generating means into an electric signal, wherein

   an absolute amount of displacement between said magnetic-field detection portion and said portion which must be detected is detected in response to the output signal.

2. A magnetic displacement detection apparatus according to claim 1, wherein said magnetic-field detection portion has the two magnetization sensing portions disposed apart from each other in the direction in which the relative movement with respect to said portion which must be detected is performed, and said detection circuit portion detects the difference between changes in the impedance of the two magnetization sensing portions so as to obtain the output signal.

3. A magnetic displacement detection apparatus according to claim 1, wherein said magnetic-field detection portion has the two magnetization sensing portions which are disposed at the same position in the direction in which the relative movement with respect to the portion which must be detected is performed, and said detection circuit portion detects the difference between changes in the impedance of the two magnetization sensing portions so as to obtain the output signal.

4. A magnetic displacement detection apparatus according to claim 3, wherein a direction in which said magnetic-field generating means is magnetized and a direction in which said magnetic-field detection portion senses magnetization are in parallel with each other.

5. A magnetic displacement detection apparatus according to claim 2, wherein said magnetic field detection portion has the two magnetization sensing portions which are disposed at the same position in a direction perpendicular to the direction in which relative movement with respect to said portion which must be detected is performed.

6. A magnetic displacement detection apparatus according to claim 1, wherein said magnetic-field detection portion incorporates an impedance change magnetic sensor having two coils which are said two magnetization sensing portions and which are wound around a core made of the material having the high magnetic permeability.

7. A magnetic displacement detection apparatus according to claim 1, wherein said magnetic-field detection portion incorporates an impedance change magnetic sensor having two amorphous magnetic wires which are said two magnetization sensing portions.

8. A magnetic displacement detection apparatus according to claim 1, wherein said portion which must be detected has two magnetic-field generating means which are disposed apart from each other while said magnetic sensor is interposed in the direction in which the relative movement with respect to said magnetic-field detection portion is performed, said two magnetic-field generating means being disposed in a state in which the directions of magnetization of said two magnetic-field generating means are opposite to each other.

9. A magnetic displacement detection apparatus according to claim 8, wherein said two magnetic-field generating means are disposed such that the directions of magnetization of said two magnetic-field generating means are in parallel with the direction in which the relative movement with respect to said magnetic-field detection portion is performed.

10. A magnetic displacement detection apparatus according to claim 8, wherein said two magnetic-field generating means are disposed such that the directions of magnetization of said two magnetic-field generating means is perpendicular to the direction in which the relative movement with respect to the magnetic-field detection portion is performed.

11. A magnetic displacement detection apparatus according to claim 8, wherein said two magnetic-field generating means are magnetically connected to each other by a material having high magnetic permeability.

12. A magnetic displacement detection apparatus according to claim 1, wherein

said magnetic-field generating means of said portion which must be detected includes two magnetic poles positioned adjacent to each other and having magnetic pole surfaces having opposite polarities has a length not shorter than an effective length for detecting the absolute amount of displacement, and

said magnetic-field generating means and said portion which must be detected are moved relatively in a state in which the boundary between the two magnetic poles of said magnetic-field detection portion is, by a predetermined angle, inclined from the direction in which the relative movement with respect to said magnetic-field detection portion is performed and the length of said magnetic-field generating means in the direction in which the relative movement is performed is not shorter than the effective length.

13. An apparatus for detecting the opening of a carburetor having a carburetor body including a venturi passage and a valve chamber opened in said venturi passage and an area-variable valve slidably disposed in said valve chamber and capable of varying the area of said venturi passage, said apparatus for detecting the opening of a carburetor comprising:

magnetic-field generating means for generating a magnetic field which is continuously changed over the range in which said area-variable valve is moved;

magnetic-field detection portion incorporating an impedance-change magnetic sensor having two magnetization sensing portions each of which is made of a material having impedance which is changed in accordance with the intensity of an external magnetic field;

an oscillation circuit portion for exciting and operating said magnetic sensor; and

a detection circuit portion for obtaining an output signal formed by converting change in the impedance of the magnetic sensor occurring in accordance with the intensity of the external magnetic field applied from said magnetic-field generating means into an electric signal, wherein

said magnetic-field generating means and said magnetic-field detection portion are provided for said carburetor body and said area-variable valve such that the relative positions are changed when said area-variable valve is moved.

14. An apparatus for detecting the opening of a carburetor according to claim 13, wherein

said magnetic-field generating means incorporates two magnetic-field generating portions magnetized in a direction perpendicular to a direction in which said area-variable valve is slid, said two magnetic-field generating portions have magnetic pole surfaces having opposite polarities and disposed apart from each other for a distance not shorter than a distance for which said area-variable valve is moved.

15. An apparatus for detecting the opening of a carburetor according to claim 13, wherein said magnetic-field generating means has two magnetic pole surfaces magnetized opposite to each other with respect to a boundary which intersects a locus of relative movement of said magnetic-field detection portion.

**Amended claims under Art. 19.1 PCT**

1. (Amended) A magnetic displacement detection apparatus comprising:

a magnetic-field detection portion incorporating an impedance-change magnetic sensor having two magnetization sensing portions each of which is made of a material having high magnetic permeability and impedance which is changed in accordance with the intensity of an external magnetic field;
a portion which must be detected and which has magnetic-field generating means for generating a magnetic field which is continuously changed in a direction in which relative movement with respect to said magnetic-field detection portion is performed;
an oscillation circuit portion for exciting and operating said magnetic sensor; and
a detection circuit portion for obtaining an output signal formed by converting change in the impedance of the magnetic sensor occurring in accordance with the intensity of the external magnetic field applied from said magnetic-field generating means into an electric signal, wherein
an absolute amount of displacement between said magnetic-field detection portion and said portion which must be detected is detected in response to the output signal.

2. A magnetic displacement detection apparatus according to claim 1, wherein said magnetic-field detection portion has the two magnetization sensing portions disposed apart from each other in the direction in which the relative movement with respect to said portion which must be detected is performed, and said detection circuit portion detects the difference between changes in the impedance of the two magnetization sensing portions so as to obtain the output signal.

3. A magnetic displacement detection apparatus according to claim 1, wherein said magnetic-field detection portion has the two magnetization sensing portions which are disposed at the same position in the direction in which the relative movement with respect to the portion which must be detected is performed, and said detection circuit portion detects the difference between changes in the impedance of the two magnetization sensing portions so as to obtain the output signal.

4. A magnetic displacement detection apparatus according to claim 3, wherein a direction in which said magnetic-field generating means is magnetized and a direction in which said magnetic-field detection portion senses magnetization are in parallel with each other.

5. A magnetic displacement detection apparatus according to claim 2, wherein said magnetic-field detection portion has the two magnetization sensing portions which are disposed at the same position in a direction perpendicular to the direction in which relative movement with respect to said portion which must be detected is performed.

6. A magnetic displacement detection apparatus according to claim 1, wherein said magnetic-field detection portion incorporates an impedance change magnetic sensor having two coils which are said two magnetization sensing portions and which are wound around a core made of the material having the high magnetic permeability.

7. A magnetic displacement detection apparatus according to claim 1, wherein said magnetic-field detection portion incorporates an impedance change magnetic sensor having two amorphous magnetic wires which are said two magnetization sensing portions.

8. A magnetic displacement detection apparatus according to claim 1, wherein said portion which must be detected has two magnetic-field generating means which are disposed apart from each other while said magnetic sensor is interposed in the direction in which the relative movement with respect to said magnetic-field detection portion is performed, said two magnetic-field generating means being disposed in a state in which the directions of magnetization of said two magnetic-field generating means are opposite to each other.

9. A magnetic displacement detection apparatus according to claim 8, wherein said two magnetic-field generating means are disposed such that the directions of magnetization of said two magnetic-field generating means are in parallel with the direction in which the relative movement with respect to said magnetic-field detection portion is performed.

10. A magnetic displacement detection apparatus according to claim 8, wherein said two magnetic-field generating means are disposed such that the directions of magnetization of said two magnetic-field generating means is perpendicular to the direction in which the relative movement with respect to the magnetic-field detection portion is performed.

11. A magnetic displacement detection apparatus according to claim 8, wherein said two magnetic-field generating means are magnetically connected to each other by a material having high magnetic permeability.

12. A magnetic displacement detection apparatus according to claim 1, wherein

said magnetic-field generating means of said portion which must be detected includes two magnetic poles positioned adjacent to each other and having magnetic pole surfaces having opposite polarities has a length not shorter than an effective length for detecting the absolute amount of displacement, and
said magnetic-field generating means and said portion which must be detected are moved relatively in a state in which the boundary between the two magnetic poles of said magnetic-field detection portion is, by a predetermined angle, inclined from the direction in which the relative movement with respect to said magnetic-field detection portion is performed and the length of said magnetic-field generating means in the direction in which the relative movement is performed is not shorter than the effective length.

13. (Amended) An apparatus for detecting the opening of a carburetor having a carburetor body including a venturi passage and a valve chamber opened in said venturi passage and an area-variable valve slidably disposed in said valve chamber and capable of varying the area of said venturi passage, said apparatus for detecting the opening of a carburetor comprising:

magnetic-field generating means for generating a magnetic field which is continuously changed over the range in which said area-variable valve is moved;
magnetic-field detection portion incorporating an impedance-change magnetic sensor having two magnetization sensing portions each of which is made of a material having high magnetic permeability and impedance which is changed in accordance with the intensity of an external magnetic field;
an oscillation circuit portion for exciting and operating said magnetic sensor; and
a detection circuit portion for obtaining an output signal formed by converting change in the impedance of the magnetic sensor occurring in accordance with the intensity of the external magnetic field applied from said magnetic-field generating means into an electric signal, wherein
said magnetic-field generating means and said magnetic-field detection portion are provided for said carburetor body and said area-variable valve such that the relative positions are changed when said area-variable valve is moved.

14. An apparatus for detecting the opening of a carburetor according to claim 13, wherein

said magnetic-field generating means incorporates two magnetic-field generating portions magnetized in a direction perpendicular to a direction in which said area-variable valve is slid, said two magnetic-field generating portions have magnetic pole surfaces having opposite polarities and disposed apart from each other for a distance not shorter than a distance for which said area-variable valve is moved.

15. An apparatus for detecting the opening of a carburetor according to claim 13, wherein said magnetic-field generating means has two magnetic pole surfaces magnetized opposite to each other with respect to a boundary which intersects a locus of relative movement of said magnetic-field detection portion.

DIAGONAL LINE PORTION : LOGIC "1"
BLANK PORTION : LOGIC "0"

FIG.1

FIG.2

FIG.3

10a

10

12

10b

11

13

FIG.4

**FIG.5**

**FIG.6**

DIRECTION OF RELATIVE MOVEMENT

*104*

*105*

*102*

*101*

N ← S

*103*

*100*

*107* — OSCILLATION CIRCUIT PORTION

*108* — DETECTION CIRCUIT PORTION → TO CONTROL UNIT

*106*

S → N

# FIG.7

*104*

*101*

*102*

*103*

9mm

10mm

# FIG.8

105,106

10mm

10mm

**FIG.9A**

105,106

S $\longrightarrow$ N

3mm

**FIG.9B**

FIG.10

**FIG.11**

**FIG.12**

**FIG.13**

**FIG.14**

*120*

DIRECTION OF RELATIVE MOVEMENT

*105*

*121A*

*122*

N | S

*106*

*121B*   *123*

*124*

S | N

*107* — OSCILLATION CIRCUIT PORTION

*108* — DETECTION CIRCUIT PORTION

→ TO CONTROL UNIT

# FIG.15

FIG.16

**FIG.17**

**FIG.18A**

DIRECTION OF RELATIVE MOVEMENT

140

105 — N / S

106 — N / S

CIRCUIT PORTION

121A  121B

122  123

124

**FIG.18B**

105 — N / S

106 — N / S

122  123

121A  121B

124

OSCILLATION CIRCUIT PORTION — 107

DETECTION CIRCUIT PORTION — 108

TO CONTROL UNIT

**FIG.19A**

115,116

10mm

5mm

**FIG.19B**

115,116

S → N

3mm

_150_

DIRECTION OF RELATIVE MOVEMENT

104

115

102

101

103

107 — OSCILLATION CIRCUIT PORTION

108 — DETECTION CIRCUIT PORTION → TO CONTROL UNIT

116

S

N

N

S

**FIG.20**

DIRECTION OF RELATIVE MOVEMENT

115

S
N

104

102

101          103

116

N
S

160

107

OSCILLATION
CIRCUIT PORTION

TO CONTROL UNIT

DETECTION
CIRCUIT PORTION

108

**FIG.21**

EP 0 896 205 A1

DIRECTION OF RELATIVE MOVEMENT

N

*101*

S

*102*

*103*

*104*

*170*

S

N

*115*

*116*

# FIG.22A

DIRECTION OF RELATIVE MOVEMENT

S

*115*

N

*101*

*116*

N

S

*103*

*104*

# FIG.22B

**FIG.23A**

133 132 134 135 136 138

131

**FIG.23B**

135 134 136 137 135 136 135 136 132

**FIG.24A**

**FIG.24B**

**FIG.25**

_190_

_126_

FPC

_132_

**N**

**S**

_139_

**S**

_131_

**N**

_125_

# FIG.26

DIRECTION OF RELATIVE MOVEMENT

**FIG.27**

LENGTH OF DISPLACEMENT IN
DIRECTION OF RELATIVE MOVEMENT (mm) →

**FIG.28**

**DIRECTION OF RELATIVE MOVEMENT**

OSCILLATION CIRCUIT PORTION

DETECTION CIRCUIT PORTION

TO CONTROL UNIT

**FIG.29**

DIRECTION OF RELATIVE MOVEMENT

*104*

*115*

S

N

*102*

*101*

*103*

| OSCILLATION CIRCUIT PORTION |
| DETECTION CIRCUIT PORTION |

*107*

*108* — TO CONTROL UNIT

*220*

# FIG.30

## FIG.31A

## FIG.31B

FIG.32

**FIG.33A**

**FIG.33B**

**FIG.34A**

**FIG.34B**

**FIG.35A**

**FIG.35B**

**FIG.36**

EP 0 896 205 A1

FIG.37

EP 0 896 205 A1

**FIG.38A**

**FIG.38B**

FIG.39

**FIG.40A**

**FIG.40B**

**FIG.41A**

**FIG.41B**

**FIG.42A**

**FIG.42B**

**FIG.43**

**FIG.44**

400

N

S

415

DIRECTION OF
RELATIVE
MOVEMENT

410

413

411

416

**FIG.45A**

411

410

412

413

416

**FIG.45B**

**FIG.46A**        **FIG.46B**

EP 0 896 205 A1

**FIG.47**

**FIG.48**

EP 0 896 205 A1

**FIG.49A**

**FIG.49B**

FIG.50

**FIG.51**

**FIG.52**

**FIG.53**

**FIG.54**

**FIG.55**

**FIG.56B**

531
x
5.0
2.0
0.5
1.0
2.0
0.5
y
UNIT: mm
THICKNESS:50μm

**FIG.56A**

523
531
534
532
50Trn
534
533
50Trn

521,522

2.0mm

4.0mm

1.5mm

N

S

# FIG.57

522  505

513

10mm

523

ℓ

DETECTION CIRCUIT

524

521

DIRECTION OF MOVEMENT

INEFFECTIVE PORTION 10mm

EMPLOYED PORTION (MAXIMUM OPENING LENGTH L) 30mm

INEFFECTIVE PORTION 10mm

511

# FIG.58

**FIG.59**

**FIG.60**

EP 0 896 205 A1

*523*

N

S

*521* *505*

S

N

*522*

DIRECTION IN WHICH
MAGNETIC SENSOR 523
AND PISTON VALVE 505
ARE MOVED RELATIVELY

# FIG.61A

CENTER OF
MAGNETIC POLE

*523*

N

S

*521*

# FIG.61B

**FIG.62**

**FIG.63**

**FIG.64**

**FIG.65A**

**FIG.65C**

**FIG.65B**

FIG.66

EP 0 896 205 A1

## INTERNATIONAL SEARCH REPORT

| | International application No. |
|---|---|
| | PCT/JP98/00318 |

**A. CLASSIFICATION OF SUBJECT MATTER**

Int.Cl⁶ G01D5/12, G01B7/00

According to International Patent Classification (IPC) or to both national classification and IPC

**B. FIELDS SEARCHED**

Minimum documentation searched (classification system followed by classification symbols)

Int.Cl⁶ G01D5/12-5/245, G01B7/00, G01R33/00-33/02

Documentation searched other than minimum documentation to the extent that such documents are included in the fields searched

Jitsuyo Shinan Koho          1926-1996   Toroku Jitsuyo Shinan Koho   1994-1998
Kokai Jitsuyo Shinan Koho   1971-1998   Jitsuyo Shinan Toroku Koho   1996-1998

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 03-138501, A (Makome Kenkyusho K.K.), | 1-3, 5-6, 8 |
| | June 12, 1991 (12. 06. 91), | |
| Y | Page 1, right column, line 11 to page 2, upper left column, line 15 ; Fig. 10A (Family: none) | 13 |
| A | | 4, 7, 9-12, 14-15 |
| Y | JP, 07-317571, A (Yamaha Motor Co., Ltd.), December 5, 1995 (05. 12. 95), | 13 |
| A | Full text (Family: none) | 14-15 |
| A | JP, 04-55720, A (Makome Kenkyusho K.K.), February 24, 1992 (24. 02. 92), Full text (Family: none) | 1-15 |
| A | JP, 57-179709, A (Sony Magnescale K.K.), November 5, 1982 (05. 11. 82), Full text (Family: none) | 1-15 |

[x] Further documents are listed in the continuation of Box C.          [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| March 31, 1998 (31. 03. 98) | April 14, 1998 (14. 04. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)